(19) Europäisches Patentamt / European Patent Office / Office européen des brevets

(11) **EP 4 517 682 B1**

(12) **EUROPEAN PATENT SPECIFICATION**

(45) Date of publication and mention of the grant of the patent:
**15.04.2026   Bulletin 2026/16**

(51) International Patent Classification (IPC):
*G06V 10/62* (2022.01)

(21) Application number: 24183924.0

(52) Cooperative Patent Classification (CPC):
**G06V 10/82; G06V 10/62; G06V 10/764**

(22) Date of filing: **24.06.2024**

(54) **REAL TIME SALIENT OBJECT DETECTION IN IMAGES AND VIDEOS**

ERKENNUNG VON AUFFÄLLIGEN ECHTZEITOBJEKTEN IN BILDERN UND VIDEOS

DÉTECTION D'OBJET SAILLANT EN TEMPS RÉEL DANS DES IMAGES ET DES VIDÉOS

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR

(30) Priority: 29.08.2023   US 202318458093

(43) Date of publication of application:
05.03.2025   Bulletin 2025/10

(73) Proprietor: **Intel Corporation**
**Santa Clara, CA 95054 (US)**

(72) Inventors:
• **SU, Zhuo**
**90570 Oulu (FI)**
• **MÜLLER, Matthias**
**81737 München (DE)**
• **WOFK, Diana**
**80798 München (DE)**
• **LIU, Li**
**90014 Oulu (FI)**

(74) Representative: **Maiwald GmbH**
**Engineering**
**Elisenhof**
**Elisenstrasse 3**
**80335 München (DE)**

(56) References cited:
CN-A- 115 100 422     US-A1- 2023 031 579

## Description

<u>Background</u>

Machine learning models (e.g., deep learning models, deep neural networks, convolutional neural networks, transformer-based models, etc.) are used in a variety of artificial intelligence and machine learning applications such as computer vision, speech recognition, and natural language processing. Machine learning models may receive and process images, videos, audio, speech, text, etc. Machine learning models can achieve high accuracy, but at the expense of high computational cost. Some machine learning models may have millions of parameters. Running such machine learning models to make predictions would involve performing many multiply-accumulate operations and many read and write data access operations.

US 2023/031 579 A1 discloses a method for detecting an object in an image. The method includes generating a plurality of feature maps by a plurality of feature extracting networks, and generating an object detection result based on the plurality of feature maps by an object detecting network in the neural network model.

<u>Summary</u>

The invention is defined by the appended claims. Embodiments and examples not covered by the claims are presented to illustrate, and facilitate the understanding of, the claimed invention.

<u>Brief Description of the Drawings</u>

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.

Figure (FIG.) 1 illustrates an exemplary machine learning model for processing one or more inputs (e.g., video) and generating one or more outputs, according to some embodiments of the disclosure.

FIG. 2 illustrates an exemplary machine learning model for processing one or more inputs (e.g., images) and generating one or more outputs, according to some embodiments of the disclosure.

Figures (FIGS.) 3A-D illustrate different pixel pair selection strategies, according to some embodiments of the disclosure.

FIG. 4 illustrates difference convolution reparameterization, according to some embodiments of the disclosure.

FIGS. 5A-B illustrate exemplary implementations of a spatial temporal difference module, according to some embodiments of the disclosure.

FIG. 6 illustrates operations of a height-time spatial temporal convolution block, e.g., during training time, according to some embodiments of the disclosure.

FIG. 7 illustrates operations of a width-time spatial temporal convolution block, e.g., during training time, according to some embodiments of the disclosure.

FIG. 8 depicts spatial temporal feature maps and processing by operators using different spatial temporal convolution types, according to some embodiments of the disclosure.

FIG. 9 depicts an exemplary implementation of a layer in a backbone stage, according to some embodiments of the disclosure.

FIG. 10 depicts an exemplary implementation of dilation convolution module, according to some embodiments of the disclosure.

FIG. 11 depicts an exemplary implementation of spatial attention module, according to some embodiments of the disclosure.

FIG. 12 is a flowchart showing a method for generating one or more outputs, according to some embodiments of the disclosure.

FIG. 13 is a flowchart showing a method for determining parameters of a machine learning model, according to some embodiments of the disclosure.

FIG. 14 is a flowchart showing a method for extracting spatial temporal information, according to some embodiments of the disclosure.

FIG. 15 is a flowchart showing a method for determining parameters of a machine learning model, according to some embodiments of the disclosure.

FIG. 16 is a block diagram of an exemplary computing device, according to some embodiments of the disclosure.

<u>Detailed Description</u>

*Overview*

Machine learning models can receive and/or process one or more inputs and generate one or more outputs. Outputs can include predictions, and/or inferences. Examples of outputs in computer vision can include edge detection, object detection, object classification, image segmentation, salient object detection, foreground detection, background removal, etc. Some machine learning models can process images and make predictions and/or inferences. Some machine learning models can process images of videos and make predictions and/or inferences. For salient object detection, the machine learning models may make pixel-wise predictions, and many machine learning models are computationally expensive. Top-performing large-scale models have high computational costs, making the models hard to deploy on resource-constrained devices (e.g., edge devices with limited computing power) and to make predictions in real time. It is a challenging technical task to implement a lightweight, efficient, but effective model for salient object detection in images and videos without significantly sacrificing performance.

Some machine learning models, if implemented efficiently, may be suitable for making inferences and/or generating predictions in real time with high accuracy. Real time salient object detection in images and videos as a computer vision task can be beneficial to applications such as object recognition and detection, visual tracking, retrieval, image and video compression, and semantic segmentation. These applications can be found in context such as self-navigating vehicles, self-driving vehicles, automated driving, industrial automation, industrial monitoring, home automation, home monitoring, etc.

In some embodiments, a machine learning model can include a backbone having one or more stages, and one or more branches that each receive and/or process corresponding outputs of the stages. One or more ones of the stages can include one or more spatial difference layer that takes advantage of different convolution types without significantly increasing the number of parameters. As used herein, parameters may include kernel weights used in a part of a machine learning model, tuning parameters that may affect the behavior of a part of a machine learning model, model parameters or internal parameters of a model that can be learned or estimated from training data. Different convolution types can extract diverse spatial features by examining pixel intensities in the standard way and examining pixel intensity differences of pixel pairs selected using different pixel pair selection strategies. Pixel intensity differences of pixel pairs can enrich feature presentation with image gradient information. Diverse spatial features can be beneficial to tasks such as salient object detection that involve predicting edges, object boundaries, and inner regions of objects.

If the machine learning model is to make predictions and/or inferences of videos, one or more ones of the branches can include a spatial temporal difference convolution module that can efficiently process temporal information and extract spatial temporal features. The spatial temporal difference convolution module may take advantage of different convolution types without significantly increasing the number of parameters, in a similar fashion to the spatial difference layer.

The resulting implementations of the machine learning model can be sufficiently lightweight and can achieve good performance with real time inference speeds on embedded devices.

A difference convolution reparameterization technique can be used to take advantage of different convolution types without significantly increasing the number of parameters in the machine learning model. The technique can capture the effect of using multiple operators with different convolution types at the computational cost of a single convolutional operator with no additional parameters. The technique can add pixel difference convolution types to standard convolutional operators without added computational cost and parameters. During training time, parallel operators implementing different convolution types can be trained using training data. The difference convolution reparameterization technique can fuse the sets of parameters learned during training time (e.g., parameters in the parallel operators) into a single fused set of parameters to be used (e.g., in a single operator) at inference time or at deployment. The technique can increase performance by increasing model capacity for capturing intensity and gradient cues, without adding parameters and computational complexity.

When making predictions and/or inferences based on video, such as video salient object detection, a machine learning model can benefit from extracting information such as temporal consistency information and temporal cues. Optical flow, recurrent neural networks, convolutional long-short term memory networks, three-dimensional convolutions can be used to extract temporal information. However, optical flow, recurrent neural networks, convolutional long-short term memory networks may not be suitable for real time processing. While three-dimensional convolutions can be faster, the representational capacity may be limited, thus can impact performance of video salient object detection.

To address some of these concerns, an efficient and effective spatial temporal difference convolution block can be used to leverage temporal information to make predictions. A spatial temporal difference convolution block can extract spatial temporal information using information on one or more two-dimensional spatial temporal planes. The spatial temporal difference convolution block can include a height-time spatial temporal convolution block that processes one or more local regions that spans across a time dimension and a height dimension, and leverages pixel differences of selected pixel pairs to probe local spatial temporal changes. The spatial temporal difference convolution block can include a width-time spatial temporal convolution block that processes one or more local regions that spans across a time dimension and a width dimension, and leverages pixel differences of selected pixel pairs to probe local spatial temporal changes. The spatial temporal difference convolution block can complement three-dimensional convolutions and enrich the overall feature representation and increase model representational capacity.

The spatial temporal difference convolution block can also apply pixel difference convolution techniques and the difference convolution reparameterization technique to one or more of: the height-time spatial temporal convolution block and/or the width-time spatial temporal convolution block. For example, the heigh-time spatial temporal convolution block can be trained using multiple parallel operators implementing different convolution types, and the sets of parameters corresponding to the parallel operators may be fused into a fused set of parameters for use in a single operator during inference time or at deployment. The technique can increase performance by increasing model capacity for capturing additional temporal consistency information and temporal saliency cues, without adding parameters and computational complexity.

*Exemplary machine learning models and parts thereof*

A machine learning model refers to computer-implemented systems that can perform one or more tasks. A machine learning model can take an input and generate an output for the task at hand. Using and implementing a machine learning model may involve supervised learning, unsupervised learning, semi-supervised learning, and reinforcement learning. A machine learning model can be implemented in different ways. A machine learning model can include one or more of: an artificial neural network, a decision tree, a support vector machine, regression analysis, a Bayesian network, a Gaussian process, a genetic algorithm, etc.

An artificial neural network may include one or more layers, modules, networks, blocks and/or operator that transform the input into an output. In some embodiments, a layer, module, network, block or operator may include one or more processing units and/or one or more processing nodes. A processing unit may receive one or more inputs, perform a processing function or operation, and generate one or more outputs. Processing units may be interconnected to form a network. In some cases, the processing units or nodes may be referred to as neurons. Different types of processing units or nodes may be distinguished by the processing function/operation that is being performed by the processing units or nodes. A processing unit may include one or more parameters. The parameters may be trained or learned. A processing unit may include one or more hyperparameters. Hyperparameters may be set or tuned by one or more users of the machine learning model.

One type of processing unit is a convolution operator. The processing unit applies a convolution operation to the input and generates an output. The convolution operation may extract features from the input and output the features as the output. The convolution operation may transform the input and generate an output. The processing unit may convolve the input with a kernel to generate an output. A kernel may include a matrix. The kernel may encode a function or operation that can transform the input. The kernel may include values or parameters that can be trained or learned. The processing unit may compute inner products (e.g., dot products) with a sliding/moving window capturing local regions or patches of the input and sum and/or accumulate the inner products to generate an output. Inner products may be computed successively across the input matrix, as the sliding/moving windows move across the input matrix. A convolution operator may be defined by the size of the kernel, e.g., a 1x1 convolution operator has a kernel size of 1x1, a 2x2 convolution operator has a kernel size of 2x2, a 3x3 convolution operator has a kernel size of 3x3, a 4x4 convolution operator has a kernel size of 4x4, a 5x5 convolution operator has a kernel size of 5x5, and so forth. The distance the window slides/moves can be set or defined by the stride of the convolution operator. In some cases, the convolution operator may apply no padding and uses the input matrix as-is. In some cases, the convolution operator may apply half padding and pads around a part of the input matrix. In some cases, the convolution operator may apply full padding and pads around the input matrix.

An exemplary layer, module, block or operator may include a dilation convolution block may increase can extract features at various scales. A dilation convolution block may expand the kernel by inserting gaps between the weights in the kernel. A dilation convolution module may have a dilation rate which indicates how much the kernel is widened. Parameters in the kernel can be trained or learned.

Another type of processing unit is a transformer unit or block. A transformer unit may be used in a transformer block. A transformer unit may implement an attention mechanism to extract dependencies between different parts of the input to the transformer unit. A transformer unit may receive an input and generate an output that represents the significance or attention of various parts of the input. A transformer unit may include query weights, key weights, and value weights as parameters that can be trained or learned. A transformer unit may apply the parameters to extract relational information between different parts of the input to the transformer unit. A transformer block may include a plurality of transformer units in parallel. A transformer block may include a plurality of transformer units in series.

Another type of processing unit is an activation unit or block. An activation block may implement or apply an activation function (e.g., a sigmoid function, a non-linear function, hyperbolic tangent function, rectified linear unit, leaky rectified linear unit, parametric rectified linear unit, sigmoid linear unit, exponential linear unit, scaled exponential linear function, logistic activation function, Heaviside activation function, identity function, binary step function, soft step function, Gaussian error linear unit, Gaussian function, softplus function, etc.) to an input to the activation block and generate an output. An activation block can be used to map an input to the block to a value between 0 and 1. An activation block can be used to map an input to the block to a 0 or a 1. An activation block can introduce non-linearity. An activation block can learn complex decision boundaries. One or more parameters of the activation function can be trained or learned.

An exemplary layer, module, block, or operator may include an upsampling block. An upsampling block may increase the size of the input features or feature maps. An upsampling block may synthesize values that can be added to the input features or feature maps to increase the size and output features or feature maps that are upsampled.

An exemplary layer, module, block, or operator may include a downsampling block. A downsampling block may perform downsampling of features or feature maps generated by the stages, which may improve running efficiency of machine learning model. A downsampling block may include a pooling layer, which may receive feature maps at its input and applies a pooling operation to the feature maps. The output of the pooling layer can be provided or inputted into a subsequent stage for further processing. The pooling operation can reduce the size of the feature maps while preserving their (important) characteristics. Accordingly, the pooling operation may improve efficiency and can avoid over-learning. A pooling layer may perform the pooling operation through average pooling (calculating the average value for each patch on the feature map), max pooling (calculating the maximum value for each patch of the feature map), or a combination of both. The size of an output of a pooling layer is smaller than the size of the feature maps provided as input to the pooling layer. In some embodiments, the pooling operation is 2x2 pixels applied with a stride of 2 pixels, so that the pooling operation reduces the size of a feature map by a factor of 2, e.g., the number of pixels or values in the feature map is reduced to one quarter the size. In some embodiments, a pooling layer applied to a feature map of $6 \times 6$ results in an output pooled feature map of $3 \times 3$.

An exemplary layer, module, block, or operator may include a projection layer. A projection layer may transform input features into a new space, such as a space that is suitable, informative, and/or useful for tasks being performed by modules downstream (for processing by modules downstream). A projection layer may include a dense layer, or a fully connected layer where each neuron (e.g., a node in a neural network) is connected to every neuron of the previous layer. A projection layer may generate and/or output a new set of features that are more abstract or high-level than features in the input. A projection layer may implement one or more 1x1 convolution operations, where the projection layer may convolve the input features with filters of size 1x1 (e.g., with zero-padding and a stride of 1). A projection layer may implement channel-wise pooling or feature map pooling. A projection layer may reduce dimensionality of the input features by pooling features across channels. A projection layer may implement a 1x1 filter to create a linear projection of a stack of feature maps. A projection layer may implement a 1x1 filter to increase the number of feature maps. A projection layer may implement a 1x1 filter to decrease the number of channels. A projection layer may make the feature maps compatible with subsequent processing layers, modules, blocks, or operators. A projection layer may ensure that an element-wise adding operation can be performed to add the output of the projection layer and another feature map. A projection layer can ensure the dimensionality of the output of the projection layer matches the dimensionality of the feature map being element-wise added together. Parameters of the projection layer can be trained or learned.

An exemplary block may include an adder block. An adder block may perform element-wise adding of two or more inputs to generate an output. An adder block can be an exemplary block that can merge and/or combine two or more inputs together. Adding and summing may be synonymous. An adder block may be replaced by a concatenate block.

An exemplary block may include a multiplier block. A multiplier block may perform element-wise multiplication of two or more inputs to generate an output. A multiplier block may determine a Hadamard product.

An exemplary block may include a concatenate block. A concatenate block may perform concatenation of two or more inputs to generate an output. A concatenate block may append vectors and/or matrices in the inputs to form a new vector and/or matrix. Vector concatenation can be appended to form a larger vector. Matrix concatenation can be performed horizontally, vertically, or in a merged fashion. Horizontal matrix concatenation can be performed by concatenating matrices (that have the same height) in the inputs width-wise. Vertical matrix concatenation can be performed by concatenating matrices (that have the same width) in the inputs height-wise. A concatenate block can be an exemplary block that can merge and/or combine two or more inputs together. A concatenate block may be suitable when the two or more inputs do not have the same dimensions. A concatenate block may be suitable when it is desirable to keep the two or more inputs unchanged or intact (e.g., to not lose information). A concatenate block may be replaced by an adder block.

Data in the machine learning model such as inputs, intermediate outputs, and outputs may be stored in non-transitory computer-readable storage media. Parameters in the machine learning model may be stored in non-transitory computer-readable storage media. Hyperparameters in the machine learning model may be stored in non-transitory computer-readable storage media. Instructions encoding operations of the machine learning model and executable by one or more processors may be stored in non-transitory computer-readable storage media.

*Exemplary machine learning models for video processing and/or image processing*

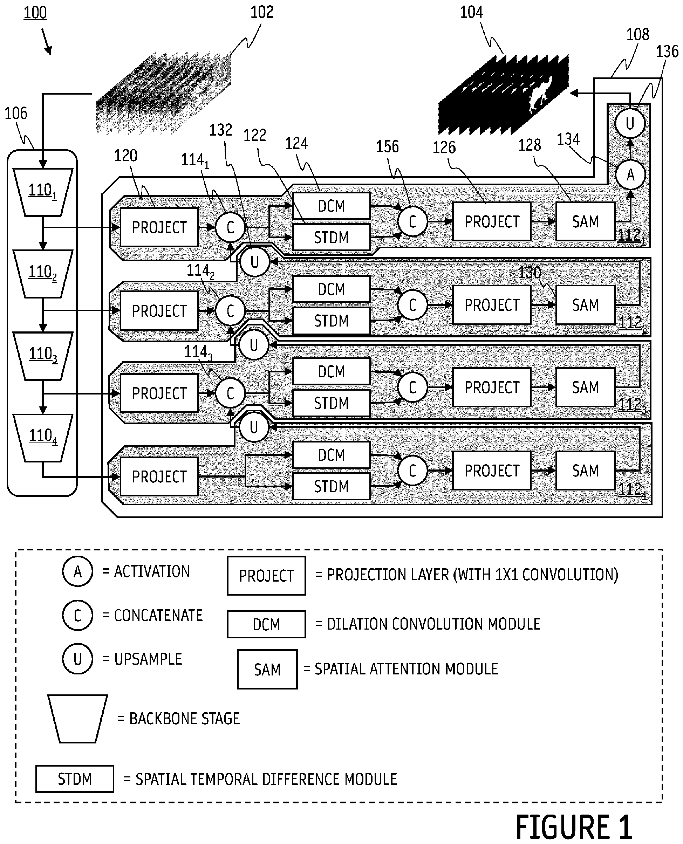

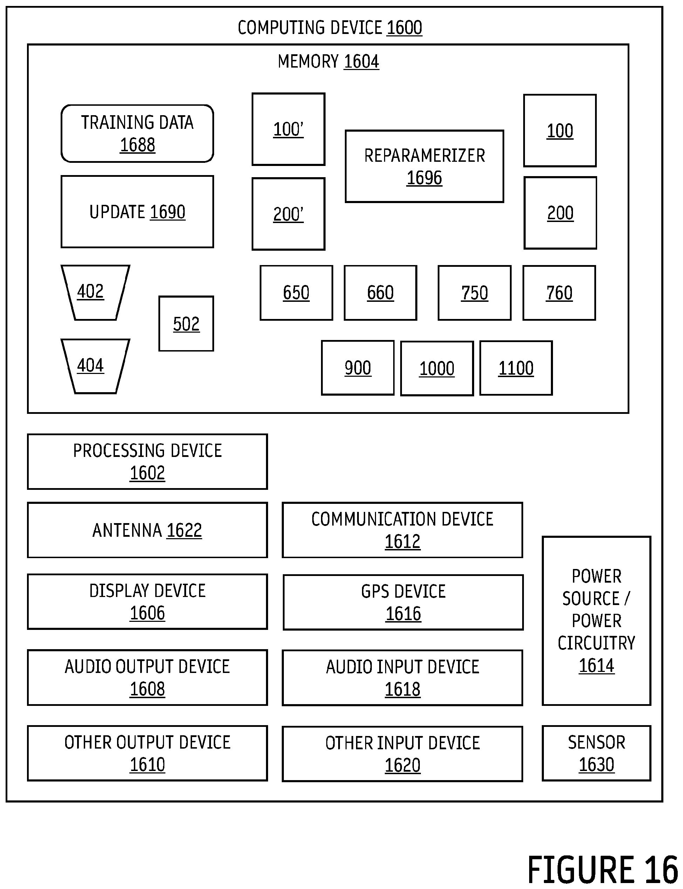

FIG. 1 illustrates an exemplary machine learning model 100 for processing one or more inputs (e.g., video) and generating outputs, according to some embodiments of the disclosure. Machine learning model 100 may be implemented on a computing device, such as computing device 1600 of FIG. 16. Machine learning model 100 may be encoded and/or stored in one or more storage devices. Data for machine learning model 100, such as input data, output data, intermediate output data, intermediate input data, etc., can be stored in the one or more storage devices. Instructions corresponding to processing operations of the machine learning model 100 may be stored in the one or more storage devices. The processing operations may be executed or performed by the one or more processors.

Machine learning model 100 may receive and/or process one or more images 102, e.g., images of a video as input. Images 102 may include pixel intensity values for one or more channels for each pixel in each image. Images 102 may include a timestamped sequence of images. Images 102 may include a sequence of images across time. Images 102 may include a number of image frames per second. Images 102 may include images captured by imaging devices. Images 102 may include color camera images, grayscale camera images, black and white camera images, infrared color images, depth camera images or depth maps, bird's eye view images, geographical map images, topographical maps, etc. Images 102 may include other spatial input data in the form of pixel values across two dimensions.

Machine learning model 100 may generate and/or output one or more outputs 104. Outputs 104 may include predictions. Outputs 104 may include inferences. Outputs 104 may include pixel-wise determinations. Outputs 104 may include determinations about individual pixels in images 102. The determinations may include such as edge detection, object classification, foreground detection, background detection, salient object detection, image segmentation, etc. Outputs 104 may include a sequence of output predictions, where each output prediction in the sequence includes prediction values across two dimensions. A prediction value may include a binary value indicating whether a pixel is part of a salient object in an image in images 102. A prediction value may include a probability value indicating how likely a pixel is a part of a salient object in an image in images 102. Outputs 104 may directly correspond to respective input images in images 102.

Machine learning model 100 may include layers and modules coupled together to form a network. Machine learning model 100 may include backbone 106. Backbone 106 can include one or more stages. Backbone 106 can include two or more stages. Backbone 106 can include four stages, as depicted in FIG. 1. Exemplary stages of backbone 106 are shown, e.g., stage $110_1$, stage $110_2$, stage $110_3$, and stage $110_4$. As illustrated, an exemplary implementation can include four stages. It is envisioned by the disclosure that a suitable number of stages can be included as part of backbone 106. A stage of backbone 106 may generate an output, including features and/or feature maps.

Machine learning model 100 may include one or more side structures 108. Side structures 108 can include one or more branches. Side structures 108 can include two or more branches. Branches may generate an output, including features and/or feature maps. Side structures 108 can include four branches, as depicted in FIG. 1. Exemplary branches in side structures 108 are shown, e.g., branch $112_1$, branch $112_2$, branch $112_3$, and branch $112_4$. Branches in side structures 108 may correspond to respective stages in backbone 106. Branches in side structures 108 may receive and/or process a corresponding output (e.g., features or feature map) of respective stages in backbone 106. An output of a branch that receives and/or processes an output of a stage following a given stage in the backbone 106 may be joined and/or combined with a branch processing an output of the given stage. A branch may receive one or more feature maps generated by a stage in backbone 106 and one or more feature maps generated by another branch. A branch may combine one or more feature maps generated by a stage in backbone 106 with one or more feature maps generated by another branch. An output of a branch may include features and/or one or more feature maps. Joining or combining may include concatenation. Joining or combining may include adding or summing. Joining or combining may include merging.

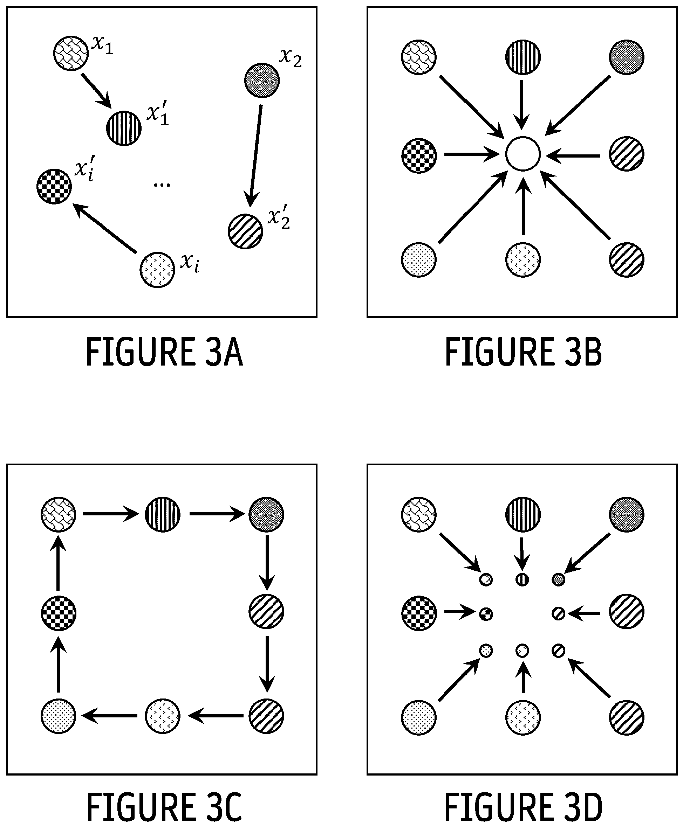

As depicted in FIG. 1, backbone 106 may include stage $110_1$, stage $110_2$, stage $110_3$, and stage $110_4$. Each stage may have one or more layers or blocks to process an input to the stage and generate features or one or more feature maps as output of the stage. Layers or blocks in a stage may extract spatial information. Details relating to training and implementation of a stage in backbone 106 are described with FIGS. 3A-D, 4, and 9. In some embodiments, one or more stages in backbone 106 can include one or more spatial difference layers, which may form a spatial difference network. A plurality of spatial difference layers can be cascaded or stacked to form a spatial difference network. A spatial difference layer can perform convolution. A spatial difference layer can perform convolution using one or more parameters (e.g., values of a kernel). The one or more parameters may be trained based on different spatial convolution types. A spatial difference layer can have one or more parameters that fuse or are based on sets of parameters trained based on different convolution types or different spatial convolution types. A spatial difference layer can have one or more parameters that are trained based on different convolution types or different spatial convolution types. Additional details relating to the spatial difference layer are described with FIGS. 3A-D, 4, 9, and 13.

As depicted in FIG. 1, side structures 108 can include branch $112_1$, branch $112_2$, branch $112_3$, and branch $112_4$. Stage $110_1$ can receive and/or process one or more images 102. Stage $110_2$ can receive and/or process an output of stage $110_1$. Stage $110_3$ can receive and/or process an output of stage $110_2$. Stage $110_4$ can receive and/or process an output of stage $110_3$. Output of stages in backbone 106 can include features, such as feature maps. Details relating to stages in backbone 106 are described with FIGS. 3A-B and 4, and 13. Respective outputs of the stages in backbone 106 can be input into respective branches in side structures 108. Branch $112_1$ can receive and/or process the output of stage $110_1$.

Branch $112_2$ can receive and/or process the output of stage $110_2$. Branch $112_3$ can receive and/or process the output of stage $110_3$. Branch $112_4$ can receive and/or process the output of stage $110_4$. The network of stages in backbone 106 and corresponding branches in side structures 108 can further refine features being extracted or feature maps as the data is being processed through machine learning model 100.

Branch $112_1$ can generate and/or output one or more outputs 104. Branch $112_2$ can generate and/or output features or feature maps that may be joined or combined with branch $112_1$. Branch $112_3$ can generate and/or output features or feature maps that may be joined or combined with branch $112_2$. Branch $112_4$ can generate and/or output features or feature maps that may be joined or combined with branch $112_3$. Joining or combining can occur through concatenation, such as using concatenate block $114_1$ in branch $112_1$. Features or feature maps at the output of branch $112_2$ can be joined or combined with branch $112_1$ by concatenating the features or feature maps at the output of branch $112_2$ with features or feature maps in branch $112_1$ (e.g., output of stage $110_1$ or transformed version of the output of stage $110_1$) at concatenate block $114_1$ in branch $112_1$. Features or feature maps at the output of branch $112_3$ can be joined or combined with branch $112_2$ by concatenating the features or feature maps at the output of branch $112_3$ with features or feature maps in branch $112_2$ (e.g., output of stage $110_2$ or transformed version of the output of stage $110_2$) at concatenate block $114_2$ in branch $112_2$. Features or feature maps at the output of branch $112_4$ can be joined or combined with branch $112_3$ by concatenating the features or feature maps at the output of branch $112_4$ with features or feature maps in branch $112_3$ (e.g., output of stage $110_3$ or transformed version of the output of stage $110_3$) at concatenate block $114_3$ in branch $112_3$. The joining or combining of outputs from stages and branches in the manner illustrated in FIG. 1 can serve to aggregate features that are generated by multiple stages and branches. Branches may include concatenate block or a suitable block to perform joining or combining of feature maps to generate combined feature maps. In some cases, branches may include an adder block to aggregate or sum feature maps to generate combined feature maps.

Branches in side structures 108 can further extract information and/or features from the outputs of stages in backbone 106. The processing performed in branches can implement spatial feature refinement or extract spatial features. The processing can implement temporal feature refinement or extract temporal features. The processing can implement spatial temporal feature refinement or extract spatial temporal features. The processing can implement attention feature refinement. The processing may include one or more modules, blocks, and/or layers that can extract features. The modules, blocks, and/or layers may be arranged in a suitable fashion. Branches can implement a same or similar set of one or more modules, blocks, and/or layers. For simplicity, the following describes the processing occurring in one of the branches, e.g., branch $112_1$. It is understood that other branches can implement the same/similar processing.

In some embodiments, branch $112_1$ may receive and/or process an output (e.g., features or feature map) from stage $110_1$. Optionally, the output from stage $110_1$ may be provided as input to a projection layer 120. A projection layer, such as projection layer 120, may transform input features into a new space, such as a space that is suitable, informative, and/or useful for tasks being performed by modules downstream (for processing by modules downstream).

Before additional processing, concatenate block $114_1$ may concatenate output of stage $110_1$, or output of projection layer 120, with the output of branch $112_2$. Features or feature maps at the output of branch $112_2$ may be concatenated with features or feature maps (or a transformed/derived version thereof) in the output of stage $110_1$. The output of concatenate block $114_1$, e.g., concatenated features or feature maps, may be processed by one or more modules.

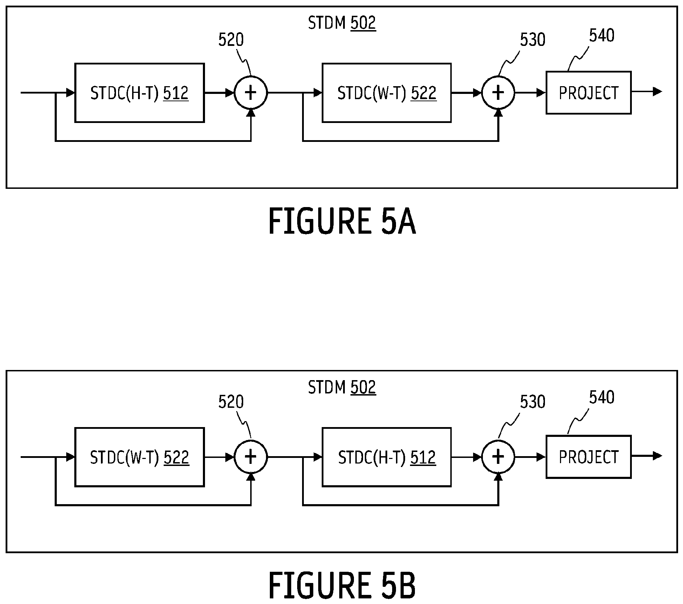

Branch $112_1$ may include one or more spatial temporal convolution module, spatial temporal difference module (STDM) or spatial temporal difference convolution module, e.g., STDM 122. A spatial temporal difference module, e.g., STDM 122, may receive and/or process the concatenated features from the output of concatenate block $114_1$. A spatial temporal difference module, e.g., STDM 122, may extract spatial temporal features. In some cases, the spatial temporal difference module may include parameters that are trained based on different spatial temporal convolution types. The parameters may fuse sets of parameters that are trained based on different spatial temporal convolution types, or may be a result of fusing sets of parameters that are trained based on different spatial temporal convolution types. Details related to the design, training, and implementation of the spatial temporal difference module are described with FIGS. 5A-B, 6-8, 14, and 15.

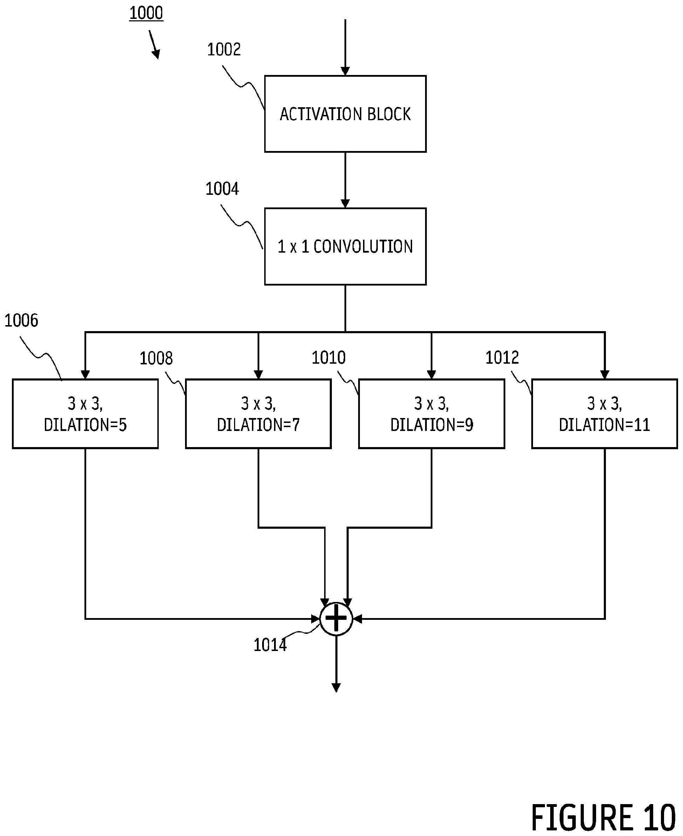

Branch $112_1$ may include one or more dilation convolution modules (DCM) or compact dilation convolution modules, e.g., DCM 124. A dilation convolution module, e.g., DCM 124 may perform one or more dilated convolutions. A dilation convolution module, e.g., DCM 124, may increase a receptive field of a kernel without increasing the number of weights or parameters. A dilation convolution module, e.g., DCM 124, may receive and/or process the concatenated features from the output of concatenate block $114_1$. Details related to the design and implementation of the dilation convolution module are described with FIG. 10.

Branch $112_1$ may include concatenate block 156 to combine and/or concatenate an output of DCM 112 (e.g., features or feature map) and an output of STDM 122 (e.g., features or feature map). The concatenated features from concatenate block 156 may be provided to projection layer 126. Projection layer 126 may transform the input features or feature maps (e.g., concatenated features or concatenated feature maps from concatenate block 156) into a new space, such as a space that is suitable, informative, and/or useful for tasks being performed by modules downstream (e.g., one or more spatial attention modules). In some cases, concatenate block 156 may be substituted by an adder block.

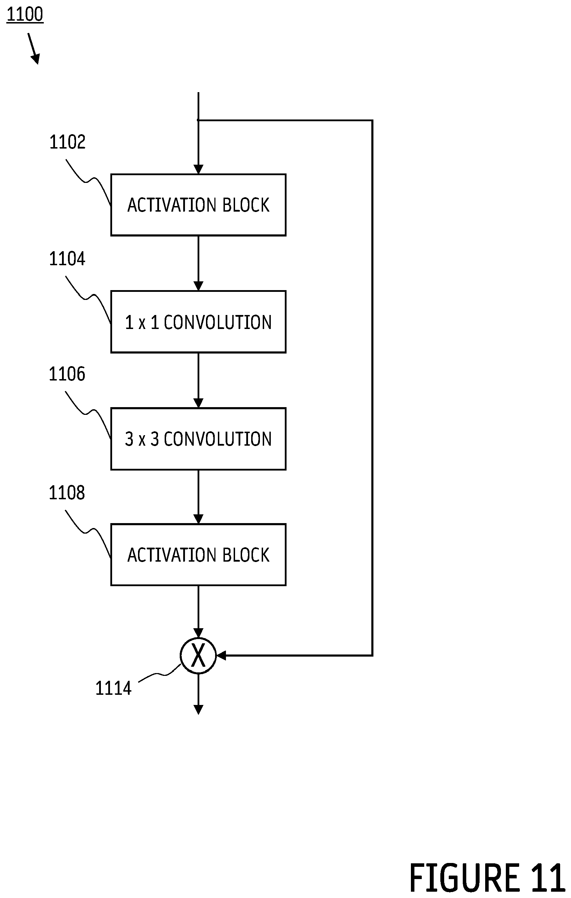

Branch $112_1$ may include one or more spatial attention modules (SAM) or compact spatial attention modules, e.g., SAM 128. A spatial attention module, e.g., SAM 128, may eliminate background noise or perform background suppression. A spatial attention module, e.g., SAM 128, may receive and/or process the concatenated features from the output of concatenated block 156 or the features at the output of projection layer 126. A spatial attention module, e.g., SAM 128, may determine one or more convolutions to extract spatial correlation information at the input of the spatial attention module. Details related to the design and implementation of the spatial attention module are described with FIG. 11.

Modules in a branch, such as DCM 124, STDM 122, and SAM 128 in branch $112_1$, may be arranged and/or connected differently in machine learning model 100. In some embodiments, SAM 128 may be arranged before DCM 124 and STDM 122. In some embodiments, SAM 128 may be arranged in parallel with DCM 124. In some embodiments, SAM 128 may be arranged in parallel with STDM 122. In some embodiments, SAM 128, DCM 124, and STDM 122 may be arranged in parallel with each other. Other arrangements are envisioned by the disclosure.

In some embodiments, features or feature maps generated by a branch processing an output of a given stage in the backbone 106 may be upsampled by an upsampling block before the features or feature maps are joined with a branch processing an output of a previous stage in the backbone 106. For example, an output of SAM 130 in branch $112_2$ may be upsampled by an upsampling block, e.g., upsampling block 132. An upsampling block, e.g., upsampling block 132 may increase the size of the features or feature maps generated by SAM 130. An upsampling block, e.g., upsampling block 132 may synthesize values that can be added to the features or feature maps generated by SAM 130 to increase the size.

Branches in side structures 108 may offer refinement of features at different stages of the machine learning model 100. In branch $112_1$, modules, such as DCM 124, and STDM 122, implement spatial and spatial temporal feature refinement respectively. The output features from DCM 124 and STDM 122 may be aggregated via concatenation, e.g., at concatenate block 156. The concatenated features may be further processed by SAM 128 for background suppression. To encourage multi-stage feature aggregation, machine learning model 100 may implement a top-down approach for refining feature maps. Specifically, the output of SAM at a given stage is concatenated with the backbone-extracted features from the previous stage prior to being fed through the refinement modules (e.g., DCM 124, and STDM 122). For example, the output of SAM 130 in branch $112_2$ may be concatenated with features or feature maps from the output of stage $110_1$ (or a transformed version thereof at the output of projection layer 120) at concatenate block $114_1$, before processing by downstream modules, e.g., DCM 124, STDM 122, and SAM 128 in branch $112_1$.

In some embodiments, an output of SAM 128 in branch $112_1$, e.g., features or feature maps generated by SAM 128, may be processed to generate one or more outputs 104. Output of SAM 128 may be provided to activation block 134. Activation block 134 may receive and/or process output of SAM 128. An activation block can be used to map output of SAM 128 to a value between 0 and 1. An activation block can introduce non-linearity. An activation block can learn complex decision boundaries (e.g., whether a particular feature or pixel is a salient object or not a salient object).

In some embodiments, an output of activation block 134 in branch $112_1$ may be upsampled by upsampling block 136. Upsampling block 136 may generate the one or more outputs 104.

In some cases, downsampling layers may be included between stages in backbone 106 (e.g., between stage $110_1$ and $110_2$, between stage $110_2$ and stage $110_3$, and/or between stage $110_2$ and stage $110_3$). A downsampling layer may perform downsampling of features or feature maps generated by the stages, which may improve running efficiency of backbone 106.

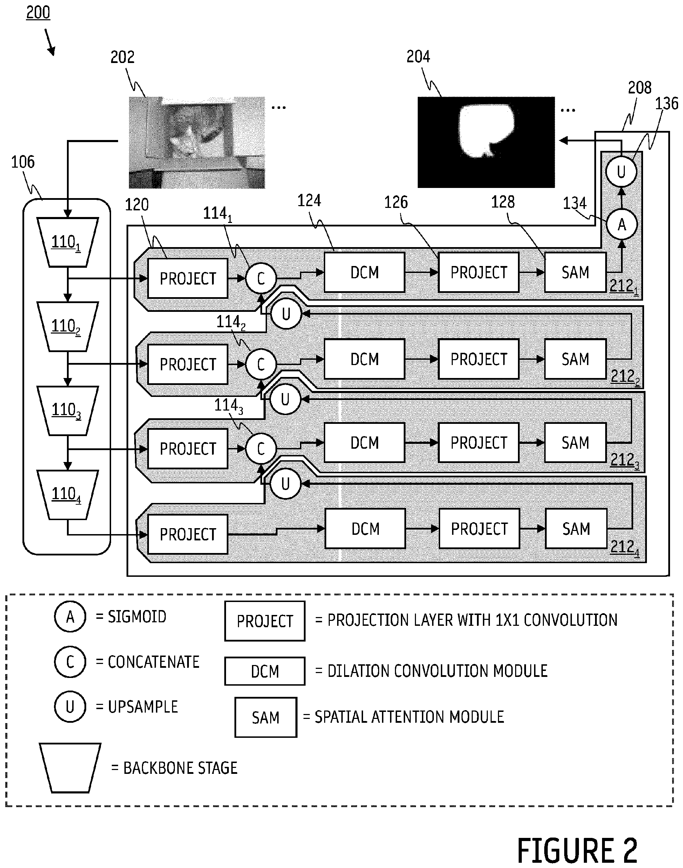

FIG. 2 illustrates an exemplary machine learning model 200 for processing images and generating outputs, according to some embodiments of the disclosure. Machine learning model 200 is similar to machine learning model 100 of FIG. 1. Machine learning model 200 may be encoded and/or stored in one or more storage devices. Machine learning model 200 may include backbone 106 and side structures 208. Backbone 106 of machine learning model 200 may receive and/or process one or more images 202, e.g., images that are not images or consecutive image frames of a video, images that do not relate to each other temporally, images that do not have temporal relationships with each other, etc. Side structures 208 can generate and/or output one or more outputs 204 that makes predictions, inferences, and/or determinations about the one or more images 202. Branches in side structures 208 may be implemented differently from branches in side structures 108 of FIG. 1. Side structures 208 of machine learning model 200 may include one or more branches, e.g., branch $212_1$, branch $212_2$, branch $212_3$, and branch $212_4$. Because the one or more images 202 do not have temporal information, modules that relate to spatial temporal processing, e.g., the spatial temporal convolution module, the spatial temporal difference module, or spatial temporal difference convolution module, and any related concatenate blocks, may be omitted. For example, branch $212_1$ may include DCM 124 and SAM 128.

In some embodiments, machine learning model 100 of FIG. 1 may include a toggle switch that can turn off or omit spatial temporal processing (e.g., spatial temporal convolution module, spatial temporal difference module, or spatial temporal difference convolution module) in branches of side structures 208.

*Vision transformer in backbone stages*

In some embodiments, one or more backbone stages in machine learning model 100 and/or machine learning model 200 may include one or more vision transformer blocks. Including a vision transformer block in a backbone stage may enhance spatial information and/or extract spatial attention features. Stage $110_1$ may include one or more vision transformer blocks. Stage $110_2$ may include one or more vision transformer blocks. Stage $110_3$ may include one or more vision transformer blocks. Stage $110_3$ may include one or more vision transformer blocks. A vision transformer block may extract distance relationships among image regions or regions in a feature map. A vision transformer block may include a global attention mechanism. The global attention mechanism may be trained on large-scale data. A vision transformer block can measure relationships between different image regions or regions in a feature map. Image regions or regions in a feature map can be placed in a sequence or linearly embedded. Position embeddings may be added. The resulting sequence of vectors can be fed to a transformer encoder. A transformer encoder may implement a global attention mechanism to draw global dependencies between input and output.

*Different exemplary convolution types*

In computer vision, convolution can be performed according to different convolution types. Different convolution types can extract different kinds of spatial information from a local region of the input feature map.

In a convolution module that implements and/or uses standard convolution type, output values can be computed from the inner product between kernel weights (e.g., parameters) and pixel intensities in local region of the input feature map.

In some convolution modules that implement and/or use other different convolution types (e.g., different pixel difference convolution types), output values can be computed from the inner product between kernel weights and pixel intensity differences between selected pairs of pixels of a local region of the input feature map. Pixel pairs may be selected within a local region, according to a selection strategy, and pixel difference convolution can be performed based on the inner product between kernel weights and the pixel differences between pairs.

Different pixel difference convolution types may select pairs of pixels using different selection strategies that can accentuate certain types or kinds of information. A first pixel difference convolution type can include computing a first inner product between first kernel weights and first pixel intensity differences between first pairs of pixels selected using a first selection strategy. A second pixel difference convolution type can include computing a second inner product between second kernel weights and second pixel intensity differences between second pairs of pixels selected using a second selection strategy that is different from the first selection strategy.

Supposing a current local region R includes pixels: $x^R = \{x_1^R, x_2^R, \dots, x_n^R, \}$, a convolution module implementing and/or using standard convolution type can perform the following:

$$y^R = f(x^R, \theta) = \sum_{i=1}^{n} w_i \cdot x_i^R \text{ (eq. 1)}$$

A convolution module implementing and/or using a pixel difference convolution type can perform the following:

$$y^R = f(\Delta x^R, \theta) = \sum_{i=1}^{m} w_i \cdot (x_i^R - x_i'^R) \text{ (eq. 2)}$$

For equation 1 and equation 2, $y^R$ may be the output value at the center of region R, $\theta = \{w_1, w_2, \dots, w_i, \dots\}$ may include the kernel weights or parameters, $(x_i^R, x_i'^R)$ may include a pair of pixels selected from $x^R$ (e.g., $x_i^R, x_i'^R \in x^R$), and m may be the number of pixel pairs in a local region.

FIGS. 3A-D illustrate different pixel pair selection strategies, according to some embodiments of the disclosure. FIG. 3A depicts an exemplary selection of pixel pairs in a local region. As depicted, a first pair of pixels in a local region $\{x_1, x_1'\}$, a second pair of pixels in the local region $\{x_2, x_2'\}$, ... an $i^{th}$ pair of pixels in the local region $\{x_i, x_i'\}$ may be selected according to a particular selection strategy.

Examining pixel differences can extract image gradient information and/or pixel relations, which can be beneficial for capturing edge cues. Different pixel difference convolution types may select pairs of pixels using different selection strategies that can accentuate different types of rich gradient information (e.g., gradient information in a variety of directions).

FIG. 3B illustrates a central pixel pair selection strategy. Pixel pairs may be selected in a manner so that pixel intensity differences of a pixel relative to the central pixel may be convolved with the kernel for the pixel difference convolution operation.

FIG. 3C illustrates an angular pixel pair selection strategy. Pixel pairs may be selected in an angular direction so that angular pixel intensity differences may be convolved with the kernel for the pixel difference convolution operation.

FIG. 3D illustrates a radial pixel pair selection strategy. Pixel pairs may be selected in radially so that radial pixel intensity differences may be convolved with the kernel for the pixel difference convolution operation. Different pixel pair selection strategies may allow probing of micro-structural patterns in complementary ways.

However, using a variety of different convolution types at inference time or at deployment can increase the number of parameters in the machine learning model. A difference convolution reparameterization may alleviate this issue by consolidating the different convolution types (trained at training time), e.g., including standard convolution and other pixel difference convolution types, into a single convolution operator (for use at inference time or at deployment) without additional parameters and computational overhead at inference time or at deployment.

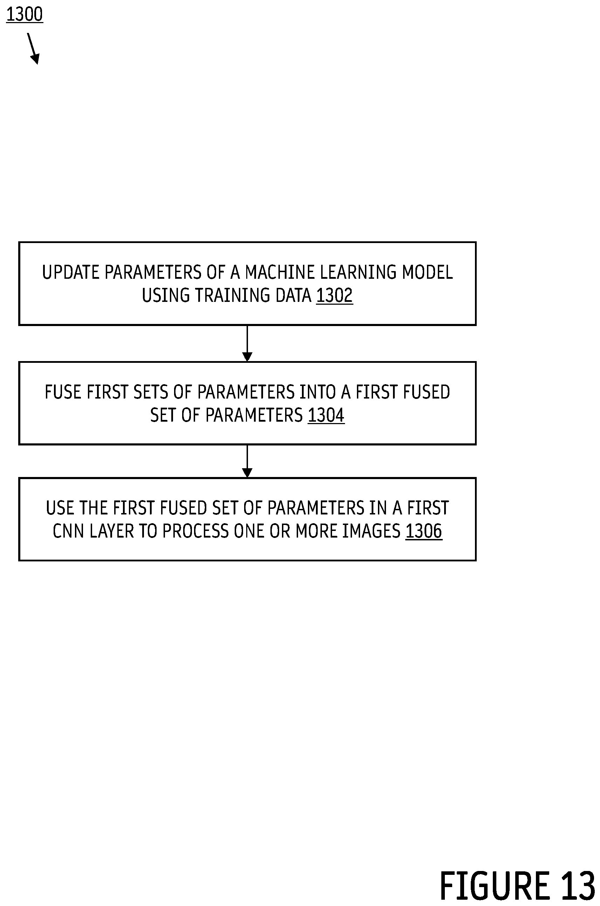

As discussed below, difference convolution reparameterization can be applied to the convolution operation occurring in backbone 106 of FIGS. 1-2 to extract rich spatial information. An exemplary method for difference convolution reparameterization is illustrated in FIG. 13.

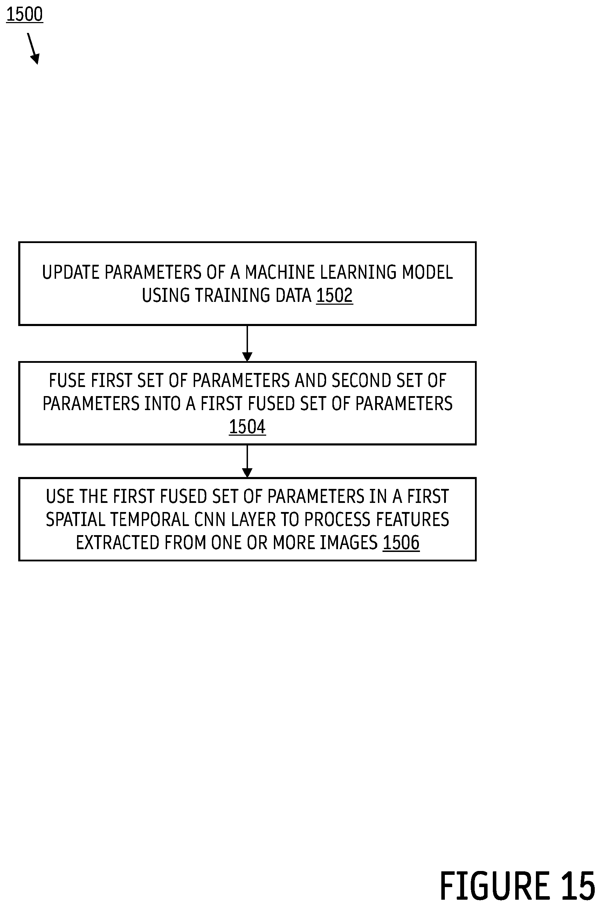

In some embodiments, difference convolution reparameterization can be applied to the different convolution operations occurring in spatial temporal convolution module, spatial temporal difference module, or spatial temporal difference convolution module, e.g., STDM 122 of FIG. 1 to extract rich spatial temporal information. Another exemplary method for difference convolution reparameterization is illustrated in FIG. 15.

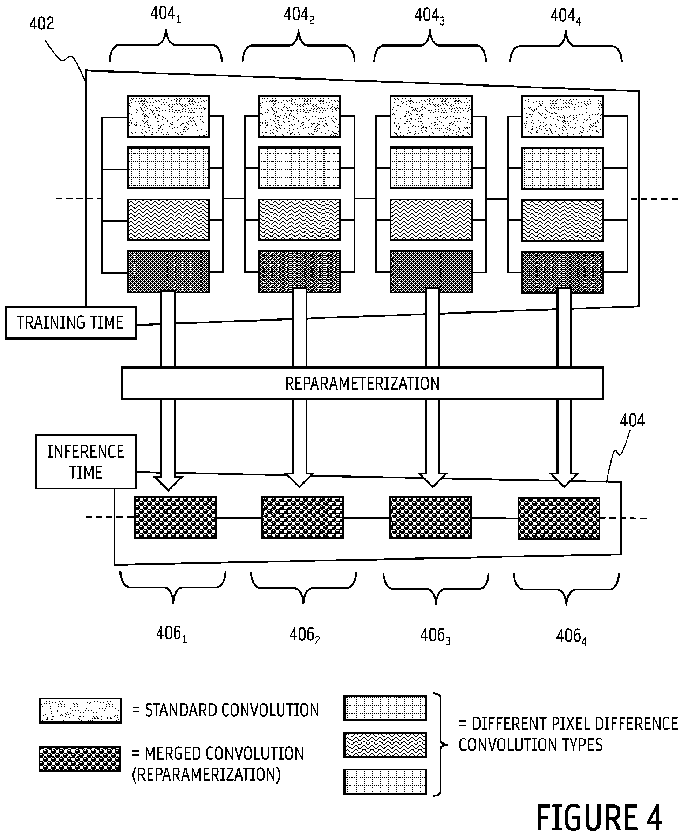

FIG. 4 illustrates difference convolution reparameterization, according to some embodiments of the disclosure. A backbone stage illustrating one of the stages in backbone 106 of FIGS. 1-2 is depicted in FIG. 4, as stage 402 at training time, and as stage 404 at inference time or at deployment. At training time, stage 402 may include one or more layers, e.g., layer $404_1$, layer $404_2$, layer $404_3$, and layer $404_4$. In a layer, one or more (parallel) operators implementing different convolution types (e.g., standard convolution type, a pixel difference convolution type) may be included in a layer. As illustrated, layer $404_1$ may include a standard convolution operator, a first pixel difference convolution operator, a second pixel difference convolution operator, and a third pixel difference convolution operator. A layer like layer $404_1$ can, in parallel, extract pixel intensity information through the standard convolution operator and various gradient statistics using the various different pixel difference convolution operator. Other layers can include one or more operators, a set of operators, or a suitable mix of operators. As illustrated, layer $404_1$, layer $404_2$, layer $404_3$, and layer $404_4$, each may include a standard convolution operator, a first pixel difference convolution operator, a second pixel difference convolution operator, and a third pixel difference convolution operator. Features extracted by respective convolution operators in a layer can be added up or summed together and may be processed by a following layer. The convolution operators each includes parameters or kernel weights which are learned or trained during training time from training data.

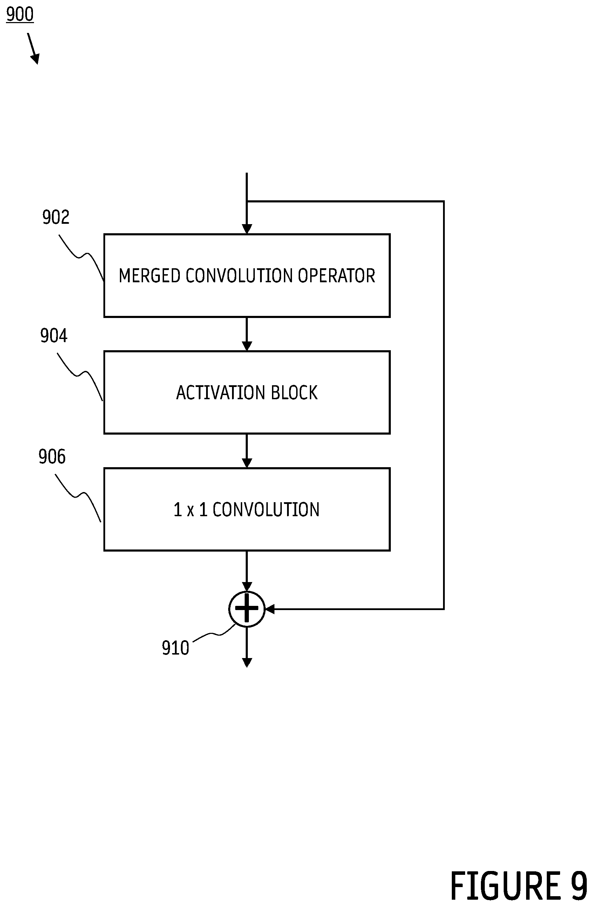

In a layer, a convolution operator implementing a certain convolution type may include a weighing parameter (or weighing coefficient), $\alpha_i$. The weighing parameter may be learned or trained during training time from training data. The weighing parameter may learn which features generated by using which convolution type may be more predictive or informative. At inference time or at deployment, stage 404 may include one or more layers, e.g., layer $406_1$, layer $406_2$, layer $406_3$, and layer $406_4$. In a layer, a single merged convolution operator merging different convolution types (e.g., standard convolution type, a pixel difference convolution type) may be included in a layer. In some embodiments, a layer may include one or more merged convolution operators. In some embodiments, a layer may include a standard convolution operator and one or more merged convolution operators. A merged convolution operator may be created by fusing the sets of parameters obtained at training time in various convolution operators corresponding to different convolution types into a set of parameters to be used in the merged convolution operator. An exemplary merged convolution operator in a layer of a backbone stage is illustrated in FIG. 9.

In some embodiments, a stage in backbone, e.g., stage 404, may include one or more spatial difference layers (e.g., layer $406_1$, layer $406_2$, layer $406_3$, and layer $406_4$). The stage may include a first spatial difference layer (e.g., layer $406_1$) that has first parameters has first parameters trained based on different convolution types. The first parameters may fuse or combine first sets of parameters, where each first set of parameters is obtained by training using a specific convolution type. The stage may include a second spatial difference layer (e.g., layer $406_2$) which has second parameters trained based on different convolution types. The second parameters may fuse or combine second sets of parameters, where each second set of parameters is obtained by training using a specific convolution type. The stage may include a third spatial difference layer (e.g., layer $406_3$) which has third parameters trained based on different convolution types. The third parameters may fuse or combine third sets of parameters, where each third set of parameters is obtained by training using a specific convolution type. The stage may include a fourth spatial difference layer (e.g., layer $406_4$) which has fourth parameters trained based on different convolution types. The fourth parameters may fuse or combine fourth sets of parameters, where each fourth set of parameters is obtained by training using a specific convolution type. The spatial difference layers may be arranged in a sequence or in cascading fashion, where an output of one layer is fed as input to a following layer. An exemplary spatial difference layer is illustrated in FIG. 9.

During training, parallel operators implementing different convolution types are trained to obtain different sets of parameters corresponding to the parallel operators. The difference convolution reparameterization technique effectively flattens the parallel operators into a single operator by fusing or combining the different sets of parameters into a single set of parameters for a single operator to be used at inference time or at deployment.

Reparameterization, e.g., fusing of or combining sets of parameters, is not a trivial task. First, operation performed by a convolution module implementing and/or using a pixel difference convolution type may be rewritten or reformulated as follows:

$$f(\Delta x, \theta_i) = \sum_j w_{i,j} \cdot (x_j - x'_j) = \sum_j x_j \cdot \left( w_{i,j} - \sum_{k \in Q_j} w_{i,k} \right) = \sum_j x_j \cdot w'_{i,j} = f(x, \theta'_i) \text{ (eq. 3)}$$

$Q_j$ may collect coefficients of "$-x_j$" term in equation 3. $R$ has been removed for simplicity. The reformulation allows for the form of a pixel difference convolution operation to be transformed into a form of a standard convolution operation. The reformulation can allow the kernel weights or parameters in a pixel difference convolution operator to be transformed into an equivalent set of kernel weights or parameters in a standard convolution operator. The transformation of kernel weights or parameters into an equivalent set of kernel weights or parameters can enable direct summing of parameters from each convolution type to form a single set of parameters that can be used in a merged convolution operator.

Sets of parameters trained using different convolution operators in a layer, e.g., $\{\alpha_i, \theta'_i\}$ corresponding to respective convolution operators (e.g., including transformed parameters), can be fused or combined together to form one or single set of parameters. The fusing or combining may include summing the parameters. The fusing or combining may include summing the parameters using respective weighing parameters (e.g., as a weighted sum). For example, a parameter from each convolution type can be summed using the weighing parameter to form a fused parameter. Parameter-wise summing of parameters from the different convolution types can be performed using the weighing parameter. An exemplary formulation can be as follows:

$$y = \sum_i \alpha_i \cdot f(\Delta x, \theta_i) = \sum_i \alpha_i \cdot f(x, \theta'_i) = \sum_i \alpha_i \cdot \sum_j x_j \cdot w'_{i,j} = \sum_j x_j \cdot \sum_i \alpha_i \cdot w'_{i,j} =$$
$$f(x, \sum_i \alpha_i \cdot \theta'_i) = f(x, \theta') \text{ (eq. 4)}$$

*Exemplary spatial temporal difference network*

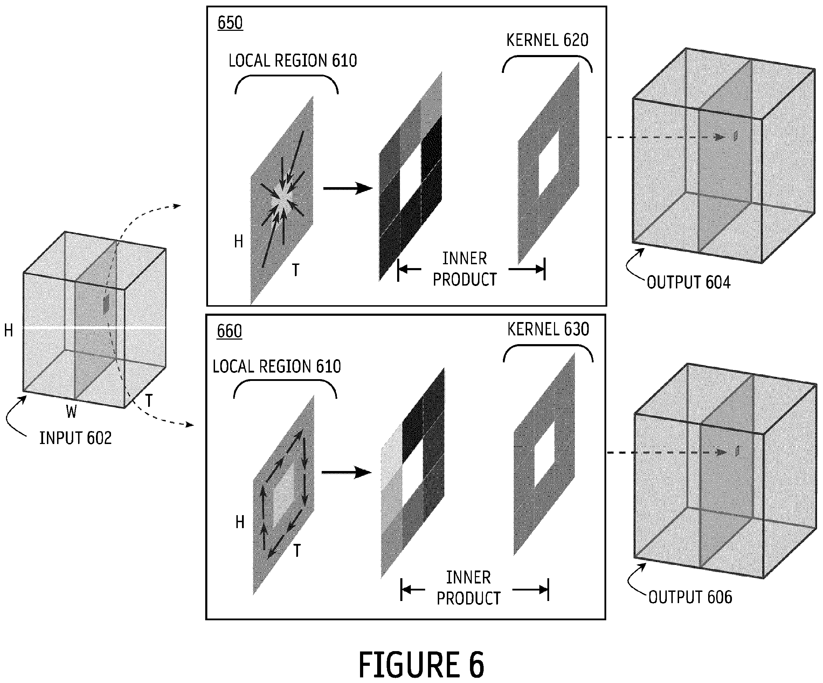

Videos may be processed using standard three-dimensional convolution, which uses pixel intensities in a local three-dimensional region (e.g., a cube) to probe spatial temporal patterns. The pixel intensities, by themselves, may not necessarily encode the local temporal changes in consecutive frames, which can be useful for determining temporal consistency. To address this concern, pixel intensity differences may be used to probe spatial temporal patterns that may not be captured through standard three-dimensional convolution. Pixel intensity differences may yield higher-order spatial temporal changes in the feature map. As discussed herein, two or more exemplary pixel pair selection strategies can be used to implement different spatial temporal convolution types. The selection strategies are illustrated in FIGS. 6-8.

Implementation of pixel intensity difference convolution for extracting spatial temporal information can be simplified by slicing three-dimensional input feature space and operating on one or more two-dimensional spatial temporal planes in the three-dimensional input feature space. In some embodiments, the three-dimensional input feature space may include a height dimension, a width dimension, and a time dimension. An exemplary two-dimensional spatial temporal plane may slice at the width dimension and obtain a height-time plane. Another exemplary two-dimensional spatial temporal plane may slice at the height dimension and obtain a width-time plane. A two-dimensional spatial temporal plane can be provided as input and can be processed by one or more (parallel) operators to extract spatial temporal information. An operator can perform two-dimensional convolution, e.g., standard convolution, or pixel difference convolution, using a two-dimensional local region on the two-dimensional spatial temporal plane (e.g., the height-time plane, or the width-time plane). Equation 1 can be used to perform standard convolution, where a local region in the height-time plane or a local region in the width-time plane is used as the local region R in equation 1. Equation 2 can be used to perform pixel difference convolution, where a local region in the height-time plane or a local region in the width-time plane is used as the local region R in equation 2. If desired, pixel selection strategies illustrated in FIGS. 3A-D can be applied to the local region in the height-time plane or a local region in the width-time plane.

As illustrated in FIG. 1, a spatial temporal convolution module, spatial temporal difference module, or spatial temporal difference convolution module can be implemented to extract spatial temporal information. The module may be referred to as a spatial temporal difference network. FIGS. 5A-B illustrate exemplary implementations of a spatial temporal difference module 502, according to some embodiments of the disclosure. The spatial temporal difference module 502 may include one or more spatial temporal difference convolution blocks, e.g., a first spatial temporal difference convolution block 512 that processes a local region in a height-time plane, and a second spatial temporal difference convolution block 522 that processes a local region in a width-time plane. The input feature space can be three-dimensional. The input feature space may include a height dimension, a width dimension, and a time dimension. The input feature space may include a time series or sequence of two-dimensional feature maps having a height dimension and a width dimension. Together and/or when stacked, the time series or sequence of two-dimensional feature maps can form the three-dimensional input feature space having a height dimension, a width dimension, and a time dimension. The first spatial temporal difference convolution block 512 can convolve a height-time slice of the input feature space using a first kernel (e.g., a matrix having parameters). Specifically, first spatial temporal difference convolution block 512 can compute an inner product between pixel intensities in a first local region of the height-time plane and the first kernel. Second spatial temporal difference convolution block 522 can convolve a width-time slice of the input feature space using a second kernel (e.g., a matrix having parameters). Specifically, the second spatial temporal difference convolution block 522 can compute an inner product between pixel intensities in a second local region of the width-time plane and the second kernel.

The first spatial temporal difference convolution block 512 can extract spatial temporal patterns in a first two-dimensional spatial temporal plane, e.g., the height-time plane. The second spatial temporal difference convolution block 522 can extract spatial temporal patterns in a second two-dimensional spatial temporal plane, e.g., the height-time plane. Features extracted by the first spatial temporal difference convolution block 512 and features extracted by the second spatial temporal difference convolution block 522 can be element-wise added to original input features provided to the spatial temporal difference module 502.

In FIG. 5A, the first spatial temporal difference convolution block 512 is arranged before the second spatial temporal difference convolution block 522. The first spatial temporal difference convolution block 512 may receive and/or process a first input (e.g., input feature space having a height dimension, a width dimension, and a time dimension) and generate a first output. The first input may be element-wise added by element-wise adder block 520 to the first output. The result of the adding (e.g., output of element-wise adder block 520) can be provided as a second input to the second spatial temporal difference convolution block 522. The second spatial temporal difference convolution block 522 can generate a second output. The second input to the second spatial temporal difference convolution block 522 may be element-wise added by element-wise adder block 530 to the second output. Optionally, a projection layer 540 may be included in spatial temporal difference module 502 to process an output of the element-wise adder block 520 to transform the output of the element-wise adder block 520 to a different feature space for additional processing. Projection layer 540 can adjust and/or reduce a number of channels in the result of adder block 530. Projection layer 540 can transform the result of adder block 530 to make the result more suitable for further processing.

In FIG. 6A, the second spatial temporal difference convolution block 522 is arranged before the first spatial temporal difference convolution block 512. The second spatial temporal difference convolution block 522 may receive and/or process a first input (e.g., input feature space having a height dimension, a width dimension, and a time dimension) and generate a first output. The first input may be element-wise added by element-wise adder block 520 to the first output. The result of the adding (e.g., output of element-wise adder block 520) can be provided as a second input to the first spatial temporal difference convolution block 512. The first spatial temporal difference convolution block 512 can generate a second output. The second input to the first spatial temporal difference convolution block 512 may be element-wise added by element-wise adder block 530 to the second output. Optionally, a projection layer 540 may be included in spatial temporal difference module 502 to process an output of the element-wise adder block 520 to transform the output of the element-wise adder block 520 to a different feature space for additional processing.

A spatial temporal difference convolution block, e.g., first spatial temporal difference convolution block 512 and second spatial temporal difference convolution block 522 can be implemented with one or more (parallel) operators using one or more specific spatial temporal convolution type. An operator can perform a standard convolution operation, as illustrated in equation 1. An operator can perform a pixel difference convolution operation, as illustrated in equation 2. The pixel difference convolution operation may implement a certain pixel selection strategy. The operator can implement a pixel difference convolution operation that can select pixel pairs according to a selection strategy, determine pixel intensity differences, and extract micro-patterns in different directions from a first local region on the height-time plane or a second local region on the width-time plane. As shown previously, e.g., in illustrations depicted in FIGS. 3A-D, exemplary selection strategies can include central pixel pair selection strategy, angular pixel pair selection strategy, and radial pixel pair selection strategy.

While some examples describe first spatial temporal difference convolution block 512 and/or second spatial temporal difference convolution block 522 implementing pixel difference convolution (e.g., implementing a pixel selection strategy to select pixel pairs to determine pixel differences in a local patch), it is envisioned by the disclosure that first spatial temporal difference convolution block 512 and/or second spatial temporal difference convolution block 522 can implement standard convolution.

For illustration, FIGS. 6-8 depicts and/or illustrate an inner product operation being performed on pixel differences of pixel pairs selected using the central pixel pair selection strategy, and angular pixel pair selection strategy, to extract spatial temporal information from a local region in a height-time plane or a local region in a width-time plane.

While the radial pixel pair selection strategy can be used, some implementations may not utilize the radial pixel pair selection strategy due to the complexity and size of the kernel. Standard convolution is not shown in FIGS. 6-7 but can be used as a convolution type when processing local regions in a height-time plane and local regions in a width-time plane.

FIG. 6 illustrates operations of a height-time spatial temporal convolution block, e.g., during training time, according to some embodiments of the disclosure. An input 602 may have a height dimension (shown as H), a width dimension (shown as W), and a time dimension (shown as T). A first local region 610 can be obtained in or within a height-time plane of the input 602. The first local region 610 may be processed by parallel operators, e.g., central pixel difference spatial temporal convolution operator 650 and angular pixel difference spatial temporal convolution operator 660. Central pixel difference spatial temporal convolution operator 650 and angular pixel difference spatial temporal convolution operator 660 can generate output 604 and output 606 respectively.

It is envisioned that the height-time spatial temporal convolution block may include one or more (parallel) operators implementing one or more different (spatial temporal) convolution types, such as standard convolution, pixel difference convolution type, central pixel difference convolution type, angular pixel difference convolution type, radial pixel difference convolution type, etc.

Top half of the FIG. 6 illustrates a central pixel difference spatial temporal convolution operator 650 computing an inner product between kernel 620 (or kernel weights or parameters) and pixel differences of pixel pairs in the first local region 610 in the height-time plane, where the pixel pairs were selected based on a central pixel pair selection strategy. Inner products computed in this manner for a sliding/moving local region in the height-time plane can be summed and/or accumulated to form the output 604. The output 604 may represent a result of applying pixel difference convolution operation to the features in the height-time plane in accordance with a central pixel pair selection strategy.

The bottom half of the FIG. 6 illustrates an angular pixel difference spatial temporal convolution operator 660 computing an inner product between kernel 630 (or kernel weights or parameters) and pixel differences of pixel pairs in the first local region 610 in the height-time plane, where the pixel pairs were selected based on an angular pixel pair selection strategy. Inner products computed in this manner for a sliding/moving local region in the height-time plane can be summed and/or accumulated to form the output 606. The output 606 may represent a result of applying pixel difference convolution operation to the features in the height-time plane in accordance with an angular pixel pair selection strategy.

Both central pixel difference spatial temporal convolution operator 650 and angular pixel difference spatial temporal convolution operator 660 can implement spatial temporal differentiation to extract spatial temporal features at higher-order than zeroth-order pixel intensity information. Output 604 and output 606 may be added together and provided to one or more additional layers/modules/blocks/operators for further processing. At training time, the parameters in kernel 620 and kernel 630 can be learned or trained using training data. A weighing parameter (or weighing coefficient), $\alpha_i$ may be included to each one of the parallel operators, e.g., the central pixel difference convolution operator 650 and an angular pixel difference spatial temporal convolution operator 660, to learn or train which type of information may carry more weight.

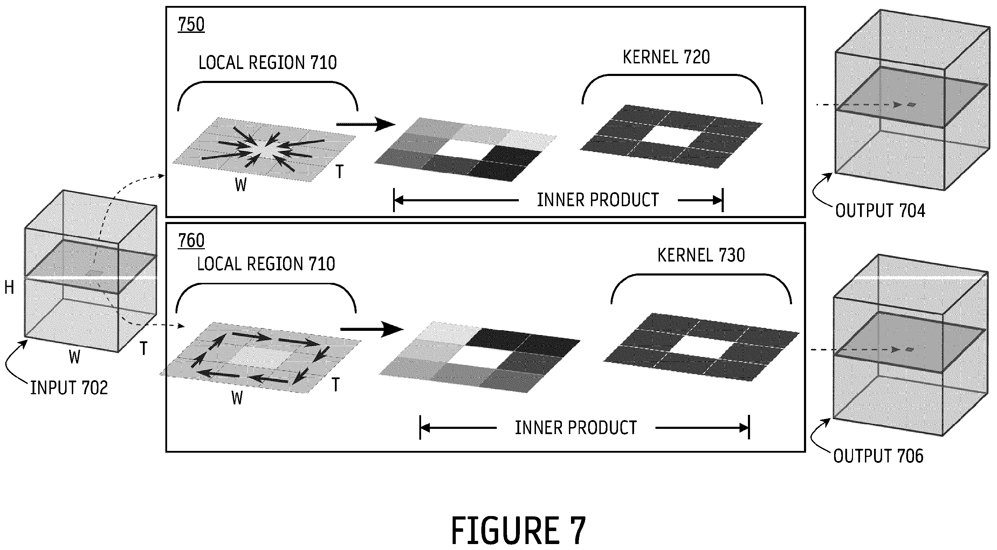

FIG. 7 illustrates operations of a width-time spatial temporal convolution block, e.g., during training time, according to some embodiments of the disclosure. An input 702 may have a height dimension (shown as H), a width dimension (shown as W), and a time dimension (shown as T). A second local region 710 can be obtained in or within a width-time plane of the input 702. The second local region 710 may be processed by parallel operators, e.g., central pixel difference spatial temporal convolution operator 750 and angular pixel difference spatial temporal convolution operator 760. Central pixel difference spatial temporal convolution operator 750 and angular pixel difference spatial temporal convolution operator 760 can generate output 704 and output 706 respectively.

It is envisioned that the width-time spatial temporal convolution block may include one or more (parallel) operators implementing one or more different (spatial temporal) convolution types, such as standard convolution, pixel difference convolution type, central pixel difference convolution type, angular pixel difference convolution type, radial pixel difference convolution type, etc.

Top half of the FIG. 7 illustrates a central pixel difference spatial temporal convolution operator 750 computing an inner product between kernel 720 (or kernel weights or parameters) and pixel differences of pixel pairs in the second local region 710 in the width-time plane, where the pixel pairs were selected based on a central pixel pair selection strategy. Inner products computed in this manner for a sliding/moving local region in the width-time plane can be summed and/or accumulated to form the output 704. The output 704 may represent a result of applying pixel difference convolution operation to the features in the width-time plane in accordance with a central pixel pair selection strategy.

The bottom half of the FIG. 7 illustrates an angular pixel difference spatial temporal convolution operator 760 computing an inner product between kernel 730 (or kernel weights or parameters) and pixel differences of pixel pairs in the second local region 710 in the width-time plane, where the pixel pairs were selected based on an angular pixel pair selection strategy. Inner products computed in this manner for a sliding/moving local region in the width-time plane can be summed and/or accumulated to form the output 706. The output 706 may represent a result of applying pixel difference convolution operation to the features in the width-time plane in accordance with an angular pixel pair selection strategy.

Both central pixel difference spatial temporal convolution operator 750 and angular pixel difference spatial temporal convolution operator 760 can implement spatial temporal differentiation to extract spatial temporal features at higher-order than zeroth-order pixel intensity information. Output 704 and output 706 may be added together and provided to one or more additional layers/modules/blocks/operators for further processing. At training time, the parameters in kernel 720 and kernel 730 can be learned or trained using training data. A weighing parameter (or weighing coefficient), $\alpha_i$ may be included to each one of the parallel operators, e.g., the central pixel difference convolution operator 750 and an angular pixel difference spatial temporal convolution operator 760, to learn or train which type of information may carry more weight.

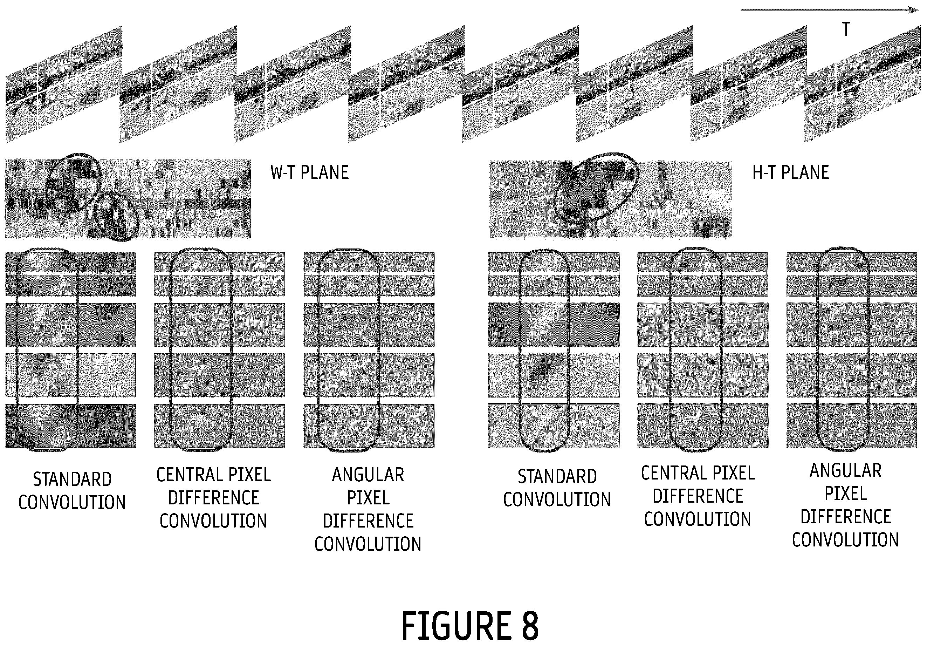

FIG. 8 depicts spatial temporal feature maps and processing by operators using different spatial temporal convolution types, according to some embodiments of the disclosure. It can be visually appreciated that spatial temporal convolution operators using different convolution types (e.g., standard convolution, pixel difference convolution type, central pixel difference convolution, angular pixel difference convolution) can capture spatial temporal features or information in different and/or complementary ways. With standard convolution, feature maps may include mostly zeroth-order intensities. In contrast, feature maps generated using pixel difference convolution types may capture higher-order spatial temporal changes and/or higher-order spatial temporal gradients. Together, different convolution types can enrich feature representation.

While examples in FIGS. 6-7 illustrate a height-time spatial temporal convolution block and a width-time spatial temporal convolution block including two convolution operators, it is envisioned that the height-time spatial temporal convolution block and/or the width-time spatial temporal convolution block can include one or more (parallel) convolution operators. The parallel convolution operators can implement different convolution types, e.g., standard convolution, pixel difference convolution type, central pixel difference convolution type, angular pixel difference convolution type, radial pixel difference convolution type, etc.

In some embodiments, reparameterization can be used to fuse or combine parameters trained using different spatial temporal convolution types, including standard convolution types and pixel difference convolution types (e.g., as illustrated in FIGS. 6-8). The first spatial temporal difference convolution block 512 can include a first kernel, e.g., having first parameters trained based on different spatial temporal convolution types. The first parameters may fuse different sets of parameters obtained by training parallel operators implementing different spatial temporal convolution types. The second spatial temporal difference convolution block 522 can include a second kernel, having second parameters that trained based on different spatial temporal convolution types. The second parameters may fuse different sets of parameters obtained by training parallel operators implementing different spatial temporal convolution types.

Different spatial temporal convolution types can include standard convolution, pixel difference convolution type, central pixel difference convolution, angular pixel difference convolution, and radial pixel difference convolution. During training time, parallel operators using different convolution types can be implemented in a spatial temporal convolution block (e.g., a height-time spatial temporal convolution block or a width-time spatial temporal convolution block). Parameters such as kernel weights and a weighting parameter for the parallel operators can be trained and/or learned. In a similar fashion as the reparameterization technique illustrated in FIG. 4, the different sets of parameters corresponding to the different parallel operators can be fused or combined together to form one set of parameters that can be used in a merged height-time spatial temporal convolution block or a merged width-time spatial temporal convolution block during inference time or at deployment. Adopting a reparameterization technique can mean that different convolution types can be used or taken advantage of at an effective cost of only one convolution type. Additional convolution types can be considered computation-free and/or parameter-free.

*Exemplary implementation of a spatial difference layer in a backbone stage*

FIG. 9 depicts an exemplary implementation of a layer 900 in a backbone stage, according to some embodiments of the disclosure. A backbone stage (e.g., stage $110_1$, stage $110_2$, stage $110_3$, and stage $110_4$ of FIGS. 1-2) can include one or more layers. In some cases, a backbone stage may include four layers. Preferably, a reparameterization technique (as illustrated in FIG. 4) has been applied to fuse different sets of parameters learned during training time into a set of parameters that can be used by a merged convolution operator at inference time (or at deployment). Layer 900 may include a (depth-wise) merged convolution operator 902 that uses the fused set of parameters. Layer 900 may include an activation block 904. Activation block 904 may implement a suitable activation function, e.g., a rectified linear function. Layer 900 may include a 1x1 convolution operator 906. Layer 900 may include a residual path that may include the merged convolution operator 902, the activation block 904, and the 1x1 convolution operator 906, and a forward path to pass an input of layer 900 through to adder 910 to form a residual output.

*Exemplary implementation of a dilation convolution module*

FIG. 10 depicts an exemplary implementation of dilation convolution module 1000, according to some embodiments of the disclosure. Dilation convolution module 1000 (e.g., DCM 124 of FIG. 1) can perform dilation and extract features at varying scales. Dilation convolution module 1000 may perform one or more dilated convolutions. Dilation convolution module 1000 may generate features or one or more feature maps. Dilation convolution module 1000 may include an activation block 1002. Activation block 1002 may implement a suitable activation function, e.g., a rectified linear function. Dilation convolution module 1000 may include a 1x1 convolution operator 1004. Dilation convolution module 1000 may include parallel dilation convolution blocks with different dilation rates. Dilation convolution block 1006 may have a dilation rate of 5. Dilation convolution block 1008 may have a dilation rate of 7. Dilation convolution block 1010 may have a dilation rate of 9. Dilation convolution block 1012 may have a dilation rate of 11. Other sets of dilation rates are envisioned by the disclosure. Outputs of the parallel dilation convolution blocks may be combined by adder 1014. Adder 1014 may adjust and/or reduce a number of channels. In some embodiments, one or more projection layers may be included to process one or more outputs of the parallel dilation convolution blocks. In some embodiments, a projection layer may be included to process an output of adder 1014. In some embodiments, adder 1014 may be combined by a concatenation block.

*Exemplary implementation of a spatial attention module*

FIG. 11 depicts an exemplary implementation of spatial attention module 1100, according to some embodiments of the disclosure. Spatial attention module 1100 (e.g., SAM 128 of FIG. 1) can perform background suppression. Spatial attention module 1100 may include an activation block 1102. Activation block 1102 may implement a suitable activation function, e.g., a rectified linear function. Spatial attention module 1100 may include a 1x1 convolution block 1104. 1x1 convolution block 1104 can adjust and/or reduce a number of channels. Spatial attention module 1100 may include a 3x3 convolution block 1106. 3x3 convolution block 1106 can determine correlation between pixels (e.g., finds spatial correlation information). Spatial attention module 1100 may include an activation block 1108. Activation block 1108 may implement a suitable activation function, e.g., a sigmoid function. An output of activation block 1108 may include a single-channel feature map. An input to the spatial attention module 1100 may be fed forward and multiplied with an output of the activation block 1108 at multiplier block 1114. Multiplier block 1114 may perform element-wise multiplication of the input to the spatial attention module 1100 (e.g., having a single-channel feature map) and an output of the activation block 1108 (e.g., having another single-channel feature map). Element-wise multiplication performed by multiplier block 1114 can generate an attention feature map.

*Exemplary method for generating one or more outputs*

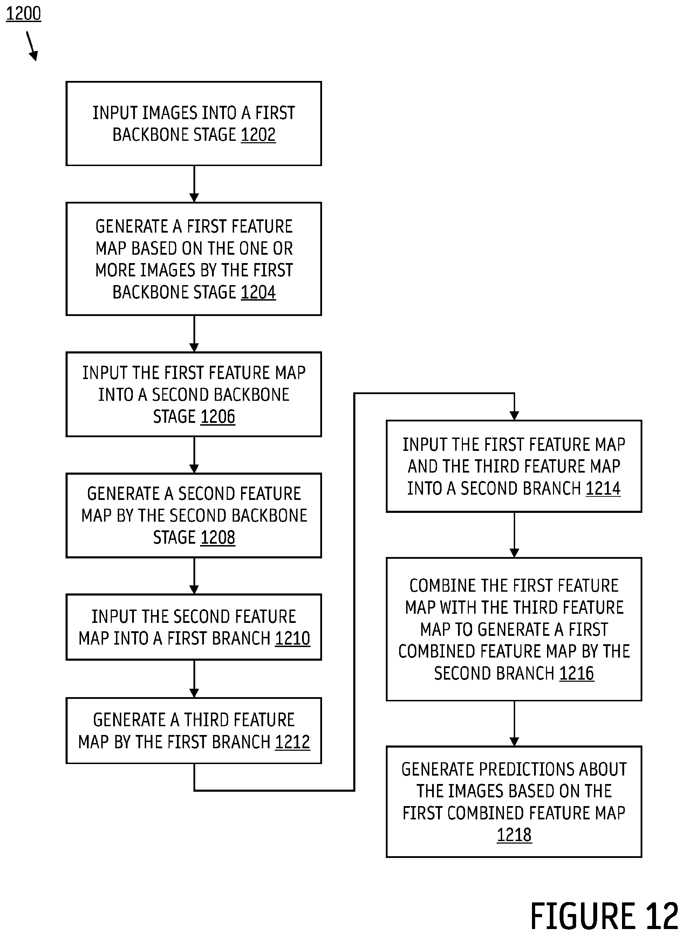

FIG. 12 is a flowchart showing method 1200 for generating outputs based on one or more images, according to some embodiments of the disclosure. One or more images can be individual images without temporal relationships with each other. One or more images can be a sequence of images of a video, e.g., time series of images. Outputs can include inferences about the one or more images. Outputs can include predictions about the one or more images. Examples of outputs can include edge detection, image segmentation, foreground detection, background detection, salient object detection, object classification, etc. Method 1200 can be performed using a computing device, such as computing device 1600 in FIG. 16.

In 1202, one or more images (e.g., images 102) may be input into a first backbone stage of a machine learning model (e.g., stage $110_1$ of backbone 106 of machine learning model 100, stage $110_1$ of backbone 106 of machine learning model 200, etc.). The first backbone stage may include a spatial difference layer to perform convolution using one or more first parameters trained based on different spatial convolution types. Exemplary spatial difference layers are illustrated in FIGURE 4.

In 1204, the first backbone stage may generate a first feature map based on the one or more images.

In 1206, the first feature map may be input into a second backbone stage of the machine learning model (e.g., stage $110_2$ of backbone 106 of machine learning model 100, stage $110_2$ of backbone 106 of machine learning model 200, etc.).

In 1208, the second backbone stage may generate a second feature map based on the first feature map.

In 1210, the second feature map may be input into a first branch of the machine learning model (e.g., branch $112_2$ of machine learning model 100, branch $212_2$ of machine learning model 200, etc.).

In 1212, the first branch may generate a third feature map based on the second feature map.

In 1214, the first feature map and the third feature map may be input into a second branch of the machine learning model (e.g., branch $112_1$ of machine learning model 100, branch $212_1$ of machine learning model 200, etc.).

In 1216, the second branch may combine the first feature map with the third feature map to generate a first combined feature map (e.g., using concatenate block $114_1$ in branch $112_1$ of machine learning model 100, using concatenate block $114_1$ in branch $212_1$ of machine learning model 200, etc.).

In 1218, the second branch may generate one or more predictions about the one or more images based on the first combined feature map.

In some embodiments, generating the one or more predictions in 1218 may include processing, by a spatial temporal difference convolution module in the second branch, the first combined feature map. The spatial temporal difference convolution module can perform convolution on one or more two-dimensional spatial temporal planes of the first combined feature map. Exemplary spatial temporal difference convolution modules are illustrated in FIGS. 5A-B. In some embodiments, the spatial temporal difference convolution module performs convolution using one or more second parameters trained based on different spatial temporal convolution types.

In some embodiments, the first backbone stage may further include a second spatial difference layer to perform convolution on an output of the first spatial difference layer using one or more third parameters trained based on different spatial convolution types. The first backbone stage may further include additional spatial difference layers.

In some embodiments, the method 1200 may further include inputting the second feature map into a third backbone stage of the machine learning model. The method 1200 may further include generating, by the third backbone stage, a fourth feature map based on the second feature map. The method 1200 may further include inputting the fourth feature map into a third branch of the machine learning model. The method 1200 may further include generating by the third branch, a fifth feature map based on the fourth feature map. The method 1200 may further include inputting the fifth feature map into the first branch. The method 1200 may further include combining, by the first branch, the second feature map with the fifth feature map to generate a second combined feature map. The first branch may generate the third feature map based on the second combined feature map.

In some embodiments, the method 1200 may further include inputting the fourth feature map into a fourth backbone stage of the machine learning model. The method 1200 may further include generating, by the fourth backbone stage, a sixth feature map based on the fourth feature map. The method 1200 may further include inputting the sixth feature map into a fourth branch of the machine learning model. The method 1200 may further include generating by the fourth branch, a seventh feature map based on the sixth feature map. The method 1200 may further include inputting the seventh feature map into the third branch. The method 1200 may further include combining, by the third branch, the fourth feature map with the seventh feature map to generate a third combined feature map. The third branch may generate the fifth feature map based on the third combined feature map.

In some embodiments, generating the one or more predictions in 1218 may include processing, by a dilation convolution module in the second branch (e.g., DCM 124 in branch $112_1$ of machine learning model 100, DCM 124 in branch $212_1$ of machine learning model 200, etc.), the first combined feature map. The dilation convolution module may perform one or more dilated convolutions. An exemplary implementation of the dilation convolution module is illustrated in FIG. 10.

In some embodiments, generating the one or more predictions in 1218 may include combining, in the second branch, an output of a spatial temporal difference convolution module and an output of a dilation convolution module to generate a fourth combined feature map (e.g., concatenate block 156 in branch $112_1$ of machine learning model 100). The spatial temporal difference convolution module may perform convolution on one or more two-dimensional spatial temporal planes of the first combined feature map. The dilation convolution module can perform one or more dilated convolutions on the first combined feature map.

In some embodiments, generating the one or more predictions in 1218 may include processing, by a spatial attention module in the second branch (e.g., SAM 128 in branch $112_1$ of machine learning model 100, SAM 128 in branch $212_1$ of machine learning model 200, etc.), the fourth combined feature map (or an output of a dilated convolution module if the spatial temporal difference convolution module is omitted, such as in the case of FIG. 2). The spatial attention module can perform convolution to extract spatial correlation information. An exemplary implementation of the spatial attention module is illustrated in FIG. 11.

In some embodiments, generating the second feature map in 1218 can include extracting, by a vision transformer block in the second backbone stage, distance relationships among image regions.

*Exemplary method for determining parameters of a machine learning model*

FIG. 13 is a flowchart showing method 1300 for determining parameters of a machine learning model, according to some embodiments of the disclosure. Method 1300 can be performed using a computing device, such as computing device 1600 in FIG. 16. Method 1300 involves applying a reparameterization technique to reduce parameters and computational complexity while taking advantage of the benefits from multiple convolution types.

In 1302, parameters of a machine learning model may be updated using training data. The machine learning model can include a first layer having first parallel operators implementing different convolution types. The different convolution types may include a pixel intensity difference convolution type implementing an inner product between kernel weights and pixel intensity differences between selected pairs of pixels in a local region. The different convolution types may include other convolution types, such as standard convolution type. The different convolution types may include other pixel difference convolution types using different pixel selection strategies. The first parallel operators may have respective first sets of parameters being updated, in 1302. In 1304, the first sets of parameters (of the parallel operators) may be fused into a first fused set of parameters. In 1306, the first fused set of parameters in a first convolutional neural network layer to process one or more images. The first convolutional neural network layer may be a layer in a backbone stage of machine learning model 100 of FIG. 1 or machine learning model 200 of FIG. 2. An exemplary implementation of the first convolutional neural network layer is illustrated in FIG. 9.

In some embodiments, each one of the respective first sets of parameters may have a corresponding weighing parameter. Method 1300 may include fusing the first sets of parameters including summing parameters in the first sets of parameters using the respective weighing parameters.

In some embodiments, the machine learning model may include a second layer processing an output of the first layer. The second layer can have second parallel operators implementing different convolution types (e.g., standard convolution type, pixel difference convolution types, etc.). The second parallel operators can have respective second sets of parameters being updated. The method 1300 may further include fusing the second set of parameters into a second fused set of parameters and using the second fused set of parameters in a second convolutional neural network layer to process an output of the first convolutional neural network layer. The second convolutional neural network layer may be a layer in a backbone stage of machine learning model 100 or machine learning model 200. An exemplary implementation of the second convolutional neural network layer is illustrated in FIG. 9.

In some embodiments, method 1300 may further include transforming one of first set of parameters corresponding to one of the first parallel operators implementing the pixel intensity difference convolution type into an equivalent set of parameters of an operator implementing an inner product between kernel weights and pixel intensities in the local region.

*Exemplary method for extracting spatial temporal information*

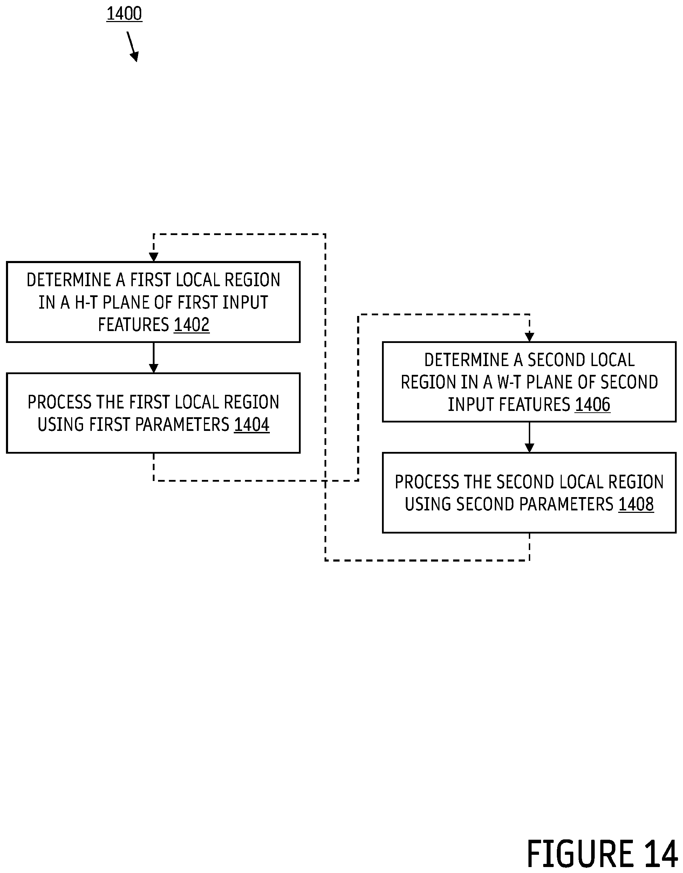

FIG. 14 is a flowchart showing method 1400 for extracting spatial temporal information, according to some embodiments of the disclosure. Method 1400 can be performed using a computing device, such as computing device 1600 in FIG. 16.

In 1402, a first local region in a height-time plane of first input features having height dimension, width dimension, and time dimension may be determined. In 1404, a height-time spatial temporal convolution block (e.g., first spatial temporal difference convolution block 512 of FIGS. 5A-B and as illustrated in FIG. 6) may process the first local region using first parameters trained based on different spatial temporal convolution types (e.g., standard convolution, pixel difference convolution type, central pixel difference convolution type, angular pixel difference convolution type, radial pixel difference convolution type, etc.). In 1406, a second local region in a width-time plane of second input features having height dimension, width dimension, and time dimension may be determined. In 1408, a width-time spatial temporal convolution block (e.g., second spatial temporal difference convolution block 522 of FIGS. 5A-B and as illustrated in FIG. 7) may process the second local region using second parameters trained based on the different spatial temporal convolution types (e.g., standard convolution, pixel difference convolution type, central pixel difference convolution type, angular pixel difference convolution type, radial pixel difference convolution type, etc.).

In some embodiments, different spatial temporal convolution types can include a first spatial temporal convolution type that computes a first inner product between first kernel weights and first pixel intensity differences between first pairs of pixels of an input local region (e.g., first local region, or second local region) selected using a first selection strategy. Different spatial temporal convolution types can include a second spatial temporal convolution type that computes a second inner product between second kernel weights and second pixel intensity differences between second pairs of pixels of the input local region (e.g., first local region or second local region) selected using a second selection strategy.

In some embodiments, the different spatial temporal convolution types can include a first spatial temporal convolution type that computes a first inner product between first kernel weights and first pixel intensities of an input local region (e.g., first local region or second local region). The different spatial temporal convolution types can include a second spatial temporal convolution type that computes a second inner product between second kernel weights and second pixel intensity differences between pairs of pixels of the input local region (e.g., first local region or second local region) selected using a selection strategy.

In some embodiments, processing the first local region using the first parameters in 1404 can include determining a first inner product between the first local region and the first parameters.

In some embodiments, processing the second local region using the second parameters in 1408 can include determining a second inner product between the second local region and the second parameters.

In some embodiments, the first input features can be element-wise added to an output of the height-time spatial temporal convolution block, and the second input features include the element-wise added features. This implementation arranges the height-time spatial temporal convolution block upstream of the weight-time spatial temporal convolution block, as illustrated in FIG. 5A.

In some embodiments, the second input features can be element-wise added to an output of the width-time spatial temporal convolution block, and the first input features include the element-wise added features. This implementation arranges the height-time spatial temporal convolution block downstream of the weight-time spatial temporal convolution block, as illustrated in FIG. 5B.

*Another exemplary method for determining parameters of a machine learning model*

FIG. 15 is a flowchart showing method 1500 for determining parameters of a machine learning model, according to some embodiments of the disclosure. Method 1500 can be performed using a computing device, such as computing device 1600 in FIG. 16. Method 1500 involves applying a reparameterization technique to reduce parameters and computational complexity while taking advantage of the benefits from multiple convolution types.

In 1502, parameters of a machine learning model using training data can be updated. The machine learning model may include a first spatial temporal convolution block processing a first local region in a first two-dimensional plane of first input features having at least three dimensions. Examples of the first spatial temporal convolution block may include the height-time spatial temporal convolution block and the width-time spatial temporal convolution block as illustrated in FIGS. 5A-B and 6-8. The first spatial temporal convolution block can include a first parallel operator implementing a first convolution type, and a second parallel operator implementing a second convolution type different from the first convolution type. Different convolution types can include (e.g., standard convolution type, pixel difference convolution type, central pixel difference convolution type, angular pixel difference convolution type, radial pixel difference convolution type, etc.). The first parallel operator may have a first set of parameters being updated in 1502. The second parallel operator may have a second set of parameters being updated in 1502. In 1504, the first and second sets of parameters can be fused into a first fused set of parameters. In 1506, the first fused set of parameters can be used in a first spatial temporal convolutional neural network layer to process features extracted from one or more images. The first spatial temporal convolutional neural network layer may be a part of the height-time spatial temporal convolution block and/or the width-time spatial temporal convolution block as illustrated in FIGS. 5A-B. The first spatial temporal convolutional neural network layer may be a part of STDM 122 in FIG. 1.

In some embodiments, the first parallel operator can determine a first inner product between first kernel weights and pixel intensity differences between first pairs of pixels in the first local region, the first pairs selected using a first selection strategy. The second parallel operator can determine a second inner product between second kernel weights and pixel intensity differences between second pairs of pixels in the first local region, the second pairs selected using a second selection strategy.

In some embodiments, the machine learning model may include a second spatial temporal convolution block processing a second local region in a second two-dimensional plane of second input features having at least three dimensions; wherein the second two-dimensional plane is orthogonal to the first two-dimensional plane. The second spatial temporal convolutional neural network layer may be a part of the height-time spatial temporal convolution block and/or the width-time spatial temporal convolution block as illustrated in FIGS. 5A-B. The second spatial temporal convolutional neural network layer may be a part of STDM 122 in FIG. 1.

In some embodiments, the second spatial temporal convolution block can include a third parallel operator implementing the first convolution type, and a fourth parallel operator implementing the second convolution type. The third parallel operator may have a third set of parameters being updated in 1502. The fourth parallel operator can have a fourth set of parameters being updated in 1502.

In some embodiments, method 1500 can further include fusing the third and fourth sets of parameters into a second fused set of parameters and using the second fused set of parameters in a second spatial temporal convolutional neural network layer to process features extracted from one or more images.

In some embodiments, each one of the respective first sets of parameters may have a (corresponding) weighing parameter. The method 1500 may include fusing the first sets of parameters including summing parameters in the first sets of parameters using the respective weighing parameters.

In some embodiments, method 1500 can include transforming the first set of parameters into an equivalent set of parameters of an operator implementing an inner product between kernel weights and pixel intensities in the first local region.

In some embodiments, method 1500 can include transforming the second set of parameters into an equivalent set of parameters of an operator implementing an inner product between kernel weights and pixel intensities in the first local region.

In some embodiments, the first two-dimensional plane is a height-time plane of the first input features having height dimension, width dimension, and time dimension.

In some embodiments, the first two-dimensional plane is a width-time plane of the first input features having height dimension, width dimension, and time dimension.

*Exemplary computing device*

FIG. 16 is a block diagram of an apparatus or a system, e.g., an exemplary computing device 1600, according to some embodiments of the disclosure. One or more computing devices 1600 may be used to implement the functionalities described with the FIGS. and herein. A number of components are illustrated in the FIGS. can be included in the computing device 1600, but any one or more of these components may be omitted or duplicated, as suitable for the application. In some embodiments, some or all of the components included in the computing device 1600 may be attached to one or more motherboards. In some embodiments, some or all of these components are fabricated onto a single system on a chip (SoC) die. Additionally, in various embodiments, the computing device 1600 may not include one or more of the components illustrated in FIG. 16, and the computing device 1600 may include interface circuitry for coupling to the one or more components. For example, the computing device 1600 may not include a display device 1606, and may include display device interface circuitry (e.g., a connector and driver circuitry) to which a display device 1606 may be coupled. In another set of examples, the computing device 1600 may not include an audio input device 1618 or an audio output device 1608 and may include audio input or output device interface circuitry (e.g., connectors and supporting circuitry) to which an audio input device 1618 or audio output device 1608 may be coupled.

The computing device 1600 may include a processing device 1602 (e.g., one or more processing devices, one or more of the same type of processing device, one or more of different types of processing device). The processing device 1602 may include electronic circuitry that process electronic data from data storage elements (e.g., registers, memory, resistors, capacitors, quantum bit cells) to transform that electronic data into other electronic data that may be stored in registers and/or memory. Examples of processing device 1602 may include a central processing unit (CPU), a graphical processing unit (GPU), a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1600 may include a memory 1604, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1604 includes one or more non-transitory computer-readable storage media. In some embodiments, memory 1604 may include memory that shares a die with the processing device 1602. In some embodiments, memory 1604 includes one or more non-transitory computer-readable media storing instructions executable to perform operations described with the FIGS. and herein, such as the methods illustrated in FIGS. 12-15. Exemplary parts that may be encoded as instructions and stored in memory 1604 are depicted. Memory 1604 may store instructions that encode one or more exemplary parts. The instructions stored in the one or more non-transitory computer-readable media may be executed by processing device 1602. In some embodiments, memory 1604 may store data, e.g., data structures, binary data, bits, metadata, files, blobs, etc., as described with the FIGS. and herein. Exemplary data that may be stored in memory 1604 are depicted. Memory 1604 may store one or more data as depicted.

In some embodiments, memory 1604 may store one or more machine learning models (and or parts thereof). Memory 1604 may store input data, output data, intermediate outputs, intermediate inputs. Memory 1604 may store instructions to perform one or more operations of the machine learning model. Memory 1604 may store one or more parameters used by the machine learning model. Memory may store information that encodes how processing units are connected with each other. Examples of machine learning models or parts of a machine learning model may include machine learning model 100 of FIG. 1, machine learning model 200 of FIG. 2, stage 402 of FIG. 4, stage 404 of FIG. 2, spatial temporal difference module 502 of FIGS. 5A-B, central pixel difference spatial temporal convolution operator 650 of FIG. 6, angular pixel difference spatial temporal convolution operator 660 of FIG. 6, central pixel difference spatial temporal convolution operator 750 of FIG. 7, angular pixel difference spatial temporal convolution operator 760 of FIG. 7, layer 900 of FIG. 9, dilation convolution module 1000 of FIG. 10, and spatial attention module 1100 of FIG. 11.

In some embodiments, memory 1604 may include training data 1688, which update part 1690 can use to update parameters in machine learning model 100' and/or machine learning model 200'. Training data 1688 may include labeled data sets. Update part 1690 may optimize the parameters in machine learning model 100' and/or machine learning model 200' to minimize a loss function. Machine learning model 100' may represent a version of machine learning model 100 of FIG. 1 that is implemented during training time. Machine learning model 200' may represent a version of machine learning model 200 of FIG. 2 that is implemented during training time. Machine learning model 100 and/or machine learning model 200 may be used during inference time (or at deployment). Reparameterizer 1696 can fuse sets of parameters in machine learning model 100' and/or machine learning model 200' to form machine learning model 100 and/or machine learning model 200, using the reparameterization techniques described herein.

In some embodiments, the computing device 1600 may include a communication device 1612 (e.g., one or more communication devices). For example, the communication device 1612 may be configured for managing wired and/or wireless communications for the transfer of data to and from the computing device 1600. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1612 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1612 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1612 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1612 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 1612 may operate in accordance with other wireless protocols in other embodiments. The computing device 1600 may include an antenna 1622 to facilitate wireless communications and/or to receive other wireless communications (such as radio frequency transmissions). The computing device 1600 may include receiver circuits and/or transmitter circuits. In some embodiments, the communication device 1612 may manage wired communications, such as electrical, optical, or any other suitable communication protocols (e.g., the Ethernet). As noted above, the communication device 1612 may include multiple communication chips. For instance, a first communication device 1612 may be dedicated to shorter-range wireless communications such as Wi-Fi or Bluetooth, and a second communication device 1612 may be dedicated to longer-range wireless communications such as global positioning system (GPS), EDGE, GPRS, CDMA, WiMAX, LTE, EV-DO, or others. In some embodiments, a first communication device 1612 may be dedicated to wireless communications, and a second communication device 1612 may be dedicated to wired communications.

The computing device 1600 may include power source / power circuitry 1614. The power source / power circuitry 1614 may include one or more energy storage devices (e.g., batteries or capacitors) and/or circuitry for coupling components of the computing device 1600 to an energy source separate from the computing device 1600 (e.g., DC power, AC power, etc.).

The computing device 1600 may include a display device 1606 (or corresponding interface circuitry, as discussed above). The display device 1606 may include any visual indicators, such as a heads-up display, a computer monitor, a projector, a touchscreen display, a liquid crystal display (LCD), a light-emitting diode display, or a flat panel display, for example.

The computing device 1600 may include an audio output device 1608 (or corresponding interface circuitry, as discussed above). The audio output device 1608 may include any device that generates an audible indicator, such as speakers, headsets, or earbuds, for example.

The computing device 1600 may include an audio input device 1618 (or corresponding interface circuitry, as discussed above). The audio input device 1618 may include any device that generates a signal representative of a sound, such as microphones, microphone arrays, or digital instruments (e.g., instruments having a musical instrument digital interface (MIDI) output).

The computing device 1600 may include a GPS device 1616 (or corresponding interface circuitry, as discussed above). The GPS device 1616 may be in communication with a satellite-based system and may receive a location of the computing device 1600, as known in the art.

The computing device 1600 may include a sensor 1630 (or one or more sensors). The computing device 1600 may include corresponding interface circuitry, as discussed above). Sensor 1630 may sense physical phenomenon and translate the physical phenomenon into electrical signals that can be processed by, e.g., processing device 1602. Examples of sensor 1630 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1600 may include another output device 1610 (or corresponding interface circuitry, as discussed above). Examples of the other output device 1610 may include an audio codec, a video codec, a printer, a wired or wireless transmitter for providing information to other devices, haptic output device, gas output device, vibrational output device, lighting output device, home automation controller, or an additional storage device.

The computing device 1600 may include another input device 1620 (or corresponding interface circuitry, as discussed above). Examples of the other input device 1620 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1600 may have any desired form factor, such as a handheld or mobile computer system (e.g., a cell phone, a smart phone, a mobile internet device, a music player, a tablet computer, a laptop computer, a personal digital assistant (PDA), a mobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 1600 may be any other electronic device that processes data.

*Select examples*

Example 1 provides a method, including inputting one or more images into a first backbone stage of a machine learning model, the first backbone stage comprising a first spatial difference layer to perform convolution using one or more first parameters trained based on different spatial convolution types; generating, by the first backbone stage, a first feature map based on the one or more images; inputting the first feature map into a second backbone stage of the machine learning model; generating, by the second backbone stage, a second feature map based on the first feature map; inputting the second feature map into a first branch of the machine learning model; generating, by the first branch, a third feature map based on the second feature map; inputting the first feature map and the third feature map into a second branch of the machine learning model; combining, by the second branch, the first feature map with the third feature map to generate a first combined feature map; and generating, by the second branch, one or more predictions about the one or more images based on the first combined feature map.

Example 2 provides the method of example 1, where: generating, by the second branch, the one or more predictions includes processing, by a spatial temporal difference convolution module in the second branch, the first combined feature map; and the spatial temporal difference convolution module performs convolution on one or more two-dimensional spatial temporal planes of the first combined feature map.

Example 3 provides the method of example 2, where the spatial temporal difference convolution module performs convolution using one or more second parameters trained based on different spatial temporal convolution types.

Example 4 provides the method of any one of examples 1-3, where the first backbone stage further includes a second spatial difference layer to perform convolution on an output of the first spatial difference layer using one or more third parameters trained based on different spatial convolution types.

Example 5 provides the method of any one of examples 1-4, further including inputting the second feature map into a third backbone stage of the machine learning model; generating, by the third backbone stage, a fourth feature map based on the second feature map; inputting the fourth feature map into a third branch of the machine learning model; generating by the third branch, a fifth feature map based on the fourth feature map; inputting the fifth feature map into the first branch; and combining, by the first branch, the second feature map with the fifth feature map to generate a second combined feature map; where the first branch generates the third feature map based on the second combined feature map.

Example 6 provides the method of example 5, further including inputting the fourth feature map into a fourth backbone stage of the machine learning model; generating, by the fourth backbone stage, a sixth feature map based on the fourth feature map; inputting the sixth feature map into a fourth branch of the machine learning model; generating by the fourth branch, a seventh feature map based on the sixth feature map; inputting the seventh feature map into the third branch; and combining, by the third branch, the fourth feature map with the seventh feature map to generate a third combined feature map; where the third branch generates the fifth feature map based on the third combined feature map.

Example 7 provides the method of any one of examples 1-6, where: generating, by the second branch, the one or more predictions includes processing, by a dilation convolution module in the second branch, the first combined feature map; and the dilation convolution module performs one or more dilated convolutions.

Example 8 provides the method of any one of examples 1-7, where: generating, by the second branch, the one or more predictions includes combining, in the second branch, an output of a spatial temporal difference convolution module and an output of a dilation convolution module to generate a fourth combined feature map; and processing, by a spatial attention module in the second branch, the fourth combined feature map; the spatial temporal difference convolution module performs convolution on one or more two-dimensional spatial temporal planes of the first combined feature map; the dilation convolution module performs one or more dilated convolutions; and the spatial attention module performs convolution to extract spatial correlation information.

Example 9 provides the method of any one of examples 1-8, where generating, by the second backbone stage, the second feature map includes extracting, by a vision transformer block in the second backbone stage, distance relationships among image regions.

Example 10 provides an apparatus, including one or more processors; and one or more storage devices storing a machine learning model having processing operations that are performed by the one or more processors, the machine learning model including a first backbone stage receiving one or more images and generating a first feature map, the first backbone stage including a first spatial difference layer to perform convolution using one or more first parameters trained based on different spatial convolution types; a second backbone stage receiving the first feature map from the first backbone stage and generating a second feature map based on the first feature map; a first branch receiving the second feature map from the second backbone stage and generating a third feature map based on the second feature map; and a second branch receiving the first feature map from the first backbone stage and the third feature map from the first branch, combining the first feature map with the third feature map to generate a first combined feature map, and generating one or more predictions about the one or more images based on the first combined feature map.

Example 11 provides the apparatus of example 10, where the second branch includes a spatial temporal difference convolution module to perform convolution on one or more two-dimensional spatial temporal planes of the first combined feature map.

Example 12 provides the apparatus of example 10 or 11, where the spatial temporal difference convolution module includes a first spatial temporal difference convolution block that performs convolution on a first local region in a height-time plane; and a second spatial temporal difference convolution block that processes a second local region in a width-time plane.

Example 13 provides the apparatus of example 11 or 12, where the spatial temporal difference convolution module performs convolution using one or more second parameters trained based on different spatial temporal convolution types.

Example 14 provides the apparatus of example 13, where the different spatial temporal convolution types include a first spatial temporal convolution type that computes a first inner product between first kernel weights and first pixel intensity differences between first pairs of pixels of a local region selected using a first selection strategy; and a second spatial temporal convolution type that computes a second inner product between second kernel weights and second pixel intensity differences between second pairs of pixels of the local region selected using a second selection strategy.

Example 15 provides the apparatus of example 13 or 14, where the different spatial temporal convolution types include a first spatial temporal convolution type that computes a first inner product between first kernel weights and first pixel intensities of a local region; and a second spatial temporal convolution type that computes a second inner product between second kernel weights and pixel intensity differences between pairs of pixels of the local region selected using a selection strategy.

Example 16 provides the apparatus of any one of examples 10-15, where the first backbone stage further includes one or more additional spatial difference layers, each additional spatial difference layer to perform convolution using one or more additional parameters trained based on different spatial convolution types.

Example 17 provides the apparatus of any one of examples 10-16, where the different spatial convolution types include a first convolution type that computes a first inner product between first kernel weights and first pixel intensity differences between first pairs of pixels selected using a first selection strategy; and a second convolution type that computes a second inner product between second kernel weights and second pixel intensity differences between second pairs of pixels selected using a second selection strategy that is different from the first selection strategy.

Example 18 provides the apparatus of any one of examples 10-17, where the different spatial convolution types include a first convolution type that computes a first inner product between first kernel weights and first pixel intensities; and a second convolution type that computes a second inner product between kernel weights and pixel intensity differences between pairs of pixels selected using a selection strategy.

Example 19 provides the apparatus of any one of examples 10-18, where the machine learning model further includes a third backbone stage receiving the second feature map from the second backbone stage and generating a fourth feature map based on the second feature map; and a third branch receiving the fourth feature map from the third backbone stage and generating a fifth feature map based on the fourth feature map; where the first branch further receives the fifth feature map and combines the second feature map with the fifth feature map to generate a second combined feature map, and generates the third feature map based on the second combined feature map.

Example 20 provides the apparatus of example 19, where the machine learning model further includes a fourth backbone stage receiving the fourth feature map from the third backbone stage and generating a sixth feature map based on the fourth feature map; and a fourth branch receiving the sixth feature map from the fourth backbone stage and generating a seventh feature map based on the sixth feature map; where the third branch further receives the seventh feature map and combines the fourth feature map with the seventh feature map to generate a third combined feature map, and generates the fifth feature map based on the third combined feature map.

Example 21 provides the apparatus of any one of examples 10-20, where the second branch further includes a dilation convolution module to receive the first combined feature map and perform one or more dilated convolutions.

Example 22 provides the apparatus of any one of examples 10-21, where the second branch further includes a spatial attention module to perform convolution and extract spatial correlation information.

Example 23 provides the apparatus of any one of examples 10-22, where the second backbone stage includes a vision transformer block to distance relationships among image regions.

Example 24 provides a method, including updating parameters of a machine learning model using training data, where: the machine learning model includes a first layer having first parallel operators implementing different convolution types, the different convolution types include a pixel intensity difference convolution type implementing an inner product between kernel weights and pixel intensity differences between selected pairs of pixels in a local region, and the first parallel operators have respective first sets of parameters being updated; fusing the first sets of parameters into a first fused set of parameters; and using the first fused set of parameters in a first convolutional neural network layer to process one or more images.

Example 25 provides the method of example 24, where: each one of the respective first sets of parameters has a weighing parameter; and fusing the first sets of parameters includes summing parameters in the first sets of parameters using the respective weighing parameters.

Example 26 provides the method of example 24 or 25, where: the machine learning model includes a second layer processing an output of the first layer; the second layer has second parallel operators implementing different convolution types; the second parallel operators have respective second sets of parameters being updated; the method further includes fusing the second set of parameters into a second fused set of parameters; and using the second fused set of parameters in a second convolutional neural network layer to process an output of the first convolutional neural network layer.

Example 27 provides the method of any one of examples 24-26, further including transforming one of first set of parameters corresponding to one of the first parallel operators implementing the pixel intensity difference convolution type into an equivalent set of parameters of an operator implementing an inner product between kernel weights and pixel intensities in the local region.

Example 28 provides a method, including determining a first local region in a height-time plane of first input features having height dimension, width dimension, and time dimension; processing, by a height-time spatial temporal convolution block, the first local region using one or more first parameters trained based on different spatial temporal convolution types; determining a second local region in a width-time plane of second input features having height dimension, width dimension, and time dimension; and processing, by a width-time spatial temporal convolution block, the second local region using one or more second parameters trained based on the different spatial temporal convolution types.

Example 29 provides the method of example 28, where the different spatial temporal convolution types include a first spatial temporal convolution type that computes a first inner product between first kernel weights and first pixel intensity differences between first pairs of pixels of an input local region selected using a first selection strategy; and a second spatial temporal convolution type that computes a second inner product between second kernel weights and second pixel intensity differences between second pairs of pixels of the input local region selected using a second selection strategy.

Example 30 provides the method of example 28 or 29, where the different spatial temporal convolution types include a first spatial temporal convolution type that computes a first inner product between first kernel weights and first pixel intensities of an input local region; and a second spatial temporal convolution type that computes a second inner product between second kernel weights and second pixel intensity differences between pairs of pixels of the input local region selected using a selection strategy.

Example 31 provides the method of any one of examples 28-30, where processing the first local region using the first parameters includes determining a first inner product between the first local region and the first parameters.

Example 32 provides the method of any one of examples 28-31, where processing the second local region using the second parameters includes determining a second inner product between the second local region and the second parameters.

Example 33 provides the method of any one of examples 28-32, where: the first input features are element-wise added to an output of the height-time spatial temporal block; and the second input features include the element-wise added features.

Example 34 provides the method of any one of examples 28-33, where: the second input features are element-wise added to an output of the width-time spatial temporal block; and the first input features include the element-wise added features.

Example 35 provides a method for determining parameters of a machine learning model, including updating parameters of a machine learning model using training data, where: the machine learning model includes a first spatial temporal convolution block processing a first local region in a first two-dimensional spatial temporal plane of first input features having at least three dimensions; the first spatial temporal convolution block includes a first parallel operator implementing a first convolution type, and a second parallel operator implementing a second convolution type different from the first convolution type; the first parallel operator has a first set of parameters being updated; and the second parallel operator has a second set of parameters being updated; fusing the first and second sets of parameters into a first fused set of parameters; and using the first fused set of parameters in a first spatial temporal convolutional neural network layer to process features extracted from one or more images.

Example 36 provides the method of example 35, where: the first parallel operator determines a first inner product between first kernel weights and pixel intensity differences between first pairs of pixels in the first local region, the first pairs selected using a first selection strategy; and the second parallel operator determines a second inner product between second kernel weights and pixel intensity differences between second pairs of pixels in the first local region, the second pairs selected using a second selection strategy.

Example 37 provides the method of example 35 or 36, where: the machine learning model includes a second spatial temporal convolution block processing a second local region in a second two-dimensional spatial temporal plane of second input features having at least three dimensions; and the second two-dimensional spatial temporal plane is orthogonal to the first two-dimensional spatial temporal plane.

Example 38 provides the method of example 37, where: the second spatial temporal convolution block includes a third parallel operator implementing the first convolution type, and a fourth parallel operator implementing the second convolution type; the third parallel operator has a third set of parameters being updated; and the fourth parallel operator has a fourth set of parameters being updated.

Example 39 provides the method of example 38, further including fusing the third and fourth sets of parameters into a second fused set of parameters; and using the second fused set of parameters in a second spatial temporal convolutional neural network layer to process features extracted from one or more images.

Example 40 provides the method of any one of examples 35-39, where: the first set of parameters has a first weighing parameter; the second set of parameters has a second weighing parameter; and fusing the first and second sets of parameters includes summing parameters in the first and second sets of parameters using the first and second weighing parameters.

Example 41 provides the method of any one of examples 35-40, further including transforming the first set of parameters into an equivalent set of parameters of an operator implementing an inner product between kernel weights and pixel intensities in the first local region.

Example 42 provides the method of any one of examples 35-41, further including transforming the second set of parameters into an equivalent set of parameters of an operator implementing an inner product between kernel weights and pixel intensities in the first local region.

Example 43 provides the method of any one of examples 35-42, where the first two-dimensional spatial temporal plane is a height-time plane of the first input features having height dimension, width dimension, and time dimension.

Example 44 provides the method of any one of examples 35-42, where the first two-dimensional spatial temporal plane is a width-time plane of the first input features having height dimension, width dimension, and time dimension.

Example 45 provides an apparatus, including one or more processors; and one or more storage devices storing a spatial temporal difference convolution module having processing operations that are performed by the one or more processors, the spatial temporal difference convolution module including a first spatial temporal difference convolution block that processes a first local region in a height-time plane of an input feature space having a height dimension, a width dimension, and a time dimension; and a second spatial temporal difference convolution block that processes a second local region in a width-time plane of the input feature space.

Example 46 provides the apparatus of example 45, where the first spatial temporal difference convolution block includes one or more first parameters trained based on different spatial temporal convolution types.

Example 47 provides the apparatus of example 46, where the different spatial temporal convolution types include: a first spatial temporal convolution type that computes a first inner product between first kernel weights and first pixel intensity differences between first pairs of pixels of the first local region selected using a first selection strategy; and a second spatial temporal convolution type that computes a second inner product between second kernel weights and second pixel intensity differences between second pairs of pixels of the first local region selected using a second selection strategy.

Example 48 provides the apparatus of example 46 or 47, where the different spatial temporal convolution types include: a first spatial temporal convolution type that computes a first inner product between first kernel weights and first pixel intensities of the first local region; and a second spatial temporal convolution type that computes a second inner product between second kernel weights and second pixel intensity differences between pairs of pixels of the first local region selected using a selection strategy.

Example 49 provides the apparatus of any one of examples 45-48, where the second spatial temporal difference convolution block includes one or more second parameters trained based on different spatial temporal convolution types.

Example 50 provides the apparatus of example 49, where the different spatial temporal convolution types include: a first spatial temporal convolution type that computes a first inner product between first kernel weights and first pixel intensity differences between first pairs of pixels of the first local region selected using a first selection strategy; and a second spatial temporal convolution type that computes a second inner product between second kernel weights and second pixel intensity differences between second pairs of pixels of the first local region selected using a second selection strategy.

Example 51 provides the apparatus of example 49 or 50, where the different spatial temporal convolution types include: a first spatial temporal convolution type that computes a first inner product between first kernel weights and first pixel intensities of the first local region; and a second spatial temporal convolution type that computes a second inner product between second kernel weights and second pixel intensity differences between pairs of pixels of the first local region selected using a selection strategy.

Example 52 provides the apparatus of any one of examples 45-51, where: the first spatial temporal difference convolution block processes a first input and generates a first output; the first input is element-wise added to the first output; a result of element-wise adding is provided as a second input to the second spatial temporal difference convolution block; the second spatial temporal difference convolution block generates a second output; and the second input is element-wise added to the second output.

Example 53 provides the apparatus of any one of examples 45-51, where: the second spatial temporal difference convolution block processes a first input and generates a first output; the first input is element-wise added to the first output; a result of element-wise adding is provided as a second input to the first spatial temporal difference convolution block; the first spatial temporal difference convolution block generates a second output; and the second input is element-wise added to the second output.

Example 54 includes one or more non-transitory computer-readable media storing instructions that, when executed by one or more processors, cause the one or more processors to perform any one of the methods provided in examples 1-9 and 24-44.

Example 55 is an apparatus comprising means to carry out or means for carrying out any one of the computer-implemented methods provided in examples 1-9 and 24-44.

*Variations and other notes*

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

**Claims**

1. A method comprising:

inputting one or more images into a first backbone stage of a machine learning model, the first backbone stage comprising a first spatial difference layer with a merged convolution operator merging different convolution types to perform convolution using one or more first parameters trained based on different spatial convolution types, said merged convolution operator having been created by fusing the sets of parameters obtained at training time in various convolution operators corresponding to different convolution types into a set of parameters to be used in the merged convolution operator, said spatial convolution types comprising at least a standard convolution operator and at least one pixel difference convolution operator;
generating, by the first backbone stage, a first feature map based on the one or more images;
inputting the first feature map into a second backbone stage of the machine learning model;
generating, by the second backbone stage, a second feature map based on the first feature map;
inputting the second feature map into a first branch of the machine learning model;
generating, by the first branch, a third feature map based on the second feature map;
inputting the first feature map and the third feature map into a second branch of the machine learning model;
combining, by the second branch, the first feature map with the third feature map to generate a first combined feature map, said combining comprising concatenation, adding, summing or merging; and
generating, by the second branch, one or more predictions about the one or more images based on the first combined feature map, said one or more predictions comprising one or more of: edge detection, image segmentation, foreground detection, background detection, salient object detection, and object classification.

2. The method of claim 1, wherein:

generating, by the second branch, the one or more predictions comprises processing, by a spatial temporal difference convolution module in the second branch, the first combined feature map; and
the spatial temporal difference convolution module

includes a height-time spatial temporal convolution block that processes one or more local regions that spans across a time dimension and a height dimension, and leverages pixel differences of selected pixel pairs to probe local spatial temporal changes, and/or
includes a width-time spatial temporal convolution block that processes one or more local regions that spans across a time dimension and a width dimension, and leverages pixel differences of selected pixel pairs to probe local spatial temporal changes,

thereby performing convolution on one or more two-dimensional spatial temporal planes of the first combined feature map.

3. The method of claim 2, wherein the spatial temporal difference convolution module performs convolution using one or more second parameters trained based on different spatial temporal convolution types.

4. The method of any one of claims 1-3, wherein the first backbone stage further comprises:
a second spatial difference layer to perform convolution on an output of the first spatial difference layer using one or more third parameters trained based on different spatial convolution types, said spatial convolution types comprising at least a standard convolution operator and at least one pixel difference convolution operator.

5. The method of any one of claims 1-4, further comprising:

inputting the second feature map into a third backbone stage of the machine learning model;

generating, by the third backbone stage, a fourth feature map based on the second feature map;
inputting the fourth feature map into a third branch of the machine learning model;
generating by the third branch, a fifth feature map based on the fourth feature map;
inputting the fifth feature map into the first branch; and
combining, by the first branch, the second feature map with the fifth feature map to generate a second combined feature map;
wherein the first branch generates the third feature map based on the second combined feature map.

6. The method of claim 5, further comprising:

inputting the fourth feature map into a fourth backbone stage of the machine learning model;
generating, by the fourth backbone stage, a sixth feature map based on the fourth feature map;
inputting the sixth feature map into a fourth branch of the machine learning model;
generating by the fourth branch, a seventh feature map based on the sixth feature map;
inputting the seventh feature map into the third branch; and
combining, by the third branch, the fourth feature map with the seventh feature map to generate a third combined feature map;
wherein the third branch generates the fifth feature map based on the third combined feature map.

7. The method of any one of claims 1-6, wherein:

generating, by the second branch, the one or more predictions comprises processing, by a dilation convolution module in the second branch, the first combined feature map; and
the dilation convolution module performs one or more dilated convolutions.

8. The method of any one of claims 1-7, wherein:

generating, by the second branch, the one or more predictions comprises:

combining, in the second branch, an output of a spatial temporal difference convolution module and an output of a dilation convolution module to generate a fourth combined feature map; and
processing, by a spatial attention module in the second branch, the fourth combined feature map;

the spatial temporal difference convolution module performs convolution on one or more two-dimensional spatial temporal planes of the first combined feature map;
the dilation convolution module performs one or more dilated convolutions; and
the spatial attention module performs convolution to extract spatial correlation information.

9. An apparatus, comprising:

one or more processors; and
one or more storage devices storing a machine learning model having processing operations that are performed by the one or more processors, the machine learning model comprising:

a first backbone stage receiving one or more images and generating a first feature map, the first backbone stage comprising a first spatial difference layer with a merged convolution operator merging different convolution types to perform convolution using one or more first parameters trained based on different spatial convolution types, said merged convolution operator having been created by fusing the sets of parameters obtained at training time in various convolution operators corresponding to different convolution types into a set of parameters to be used in the merged convolution operator, said spatial convolution types comprising at least a standard convolution operator and at least one pixel difference convolution operator;
a second backbone stage receiving the first feature map from the first backbone stage and generating a second feature map based on the first feature map;
a first branch receiving the second feature map from the second backbone stage and generating a third feature map based on the second feature map; and
a second branch receiving the first feature map from the first backbone stage and the third feature map from the first branch, combining the first feature map with the third feature map to generate a first combined feature map, said combining comprising concatenation, adding, summing or merging, and generating one or more predictions about the one or more images based on the first combined feature map, said one or more predictions comprising one or more of: edge detection, image segmentation, foreground detection, background detection, salient object detection, and object classification.

10. The apparatus of claim 9, wherein the second branch comprises a spatial temporal difference convolution module to perform convolution on one or more two-dimensional spatial temporal planes of the first combined feature map.

11. The apparatus of claim 10, wherein the spatial temporal difference convolution module comprises:

a first spatial temporal difference convolution block that performs convolution on a first local region in a height-time plane; and
a second spatial temporal difference convolution block that processes a second local region in a width-time plane.

12. The apparatus of claim 10 or 11, wherein the spatial temporal difference convolution module performs convolution using one or more second parameters trained based on different spatial temporal convolution types.

13. The apparatus of any one of claims 9-12, wherein the second backbone stage comprises a vision transformer block to extract distance relationships among image regions.

14. The apparatus of any one of claims 9-13, wherein the second branch further comprises one or more of:

a dilation convolution module to receive the first combined feature map and perform one or more dilated convolutions; and
a spatial attention module to perform convolution and extract spatial correlation information.

15. One or more non-transitory computer-readable media storing instructions that, when executed by one or more processors, cause the one or more processors to perform a method according to any one of claims 1-8.

**Patentansprüche**

1. Verfahren, umfassend:

Eingeben eines oder mehrerer Bilder in eine erste Backbone-Stufe eines Maschinenlernmodells, wobei die erste Backbone-Stufe eine erste räumliche Differenzschicht mit einem gemischten Faltungsoperator umfasst, der verschiedene Faltungsarten zusammenführt, um eine Faltung unter Verwendung eines oder mehrerer erster Parameter durchzuführen, die basierend auf unterschiedlichen räumlichen Faltungsarten trainiert werden, wobei der zusammengeführte Faltungsoperator durch Verschmelzen der Sätze von Parametern, die zur Trainingszeit in verschiedenen Faltungsoperatoren erhalten wurden, die verschiedenen Faltungsarten entsprechen, in einen Satz von Parametern erzeugt wurde, die in dem zusammengeführten Faltungsoperator verwendet werden sollen, wobei die räumlichen Faltungsarten mindestens einen Standardfaltungsoperator und mindestens einen Pixeldifferenzfaltungsoperator umfassen;
Erzeugen einer ersten Merkmalskarte durch die erste Backbone-Stufe basierend auf dem einen oder den mehreren Bildern;
Eingeben der ersten Merkmalskarte in eine zweite Backbone-Stufe des Maschinenlernmodells;
Erzeugen einer zweiten Merkmalskarte durch die zweite Backbone-Stufe basierend auf der ersten Merkmalskarte;
Eingeben der zweiten Merkmalskarte in einen ersten Zweig des Maschinenlernmodells;
Erzeugen einer dritten Merkmalskarte durch den ersten Zweig basierend auf der zweiten Merkmalskarte;
Eingeben der ersten Merkmalskarte und der dritten Merkmalskarte in einen zweiten Zweig des Maschinenlernmodells;
Kombinieren der ersten Merkmalskarte mit der dritten Merkmalskarte durch den zweiten Zweig, um eine erste kombinierte Merkmalskarte zu erzeugen, wobei das Kombinieren Verkettung, Hinzufügen, Summieren oder Zusammenführen umfasst; und
Erzeugen einer oder mehrerer Vorhersagen über das eine oder die mehreren Bilder durch den zweiten Zweig basierend auf der ersten kombinierten Merkmalskarte, wobei die eine oder die mehreren Vorhersagen eines oder mehrere von folgendem umfassen: Kantendetektion, Bildsegmentierung, Vordergrunddetektion, Hintergrunddetektion, Detektion auffälliger Objekte und Objektklassifizierung.

2. Verfahren nach Anspruch 1, wobei:

> das Erzeugen der einen oder der mehreren Vorhersagen durch den zweiten Zweig das Verarbeiten der ersten kombinierten Merkmalskarte durch ein räumlich-zeitliches Differenzfaltungsmodul in dem zweiten Zweig umfasst; und
> das räumlich-zeitliche Differenzfaltungsmodul einen räumlich-zeitlichen Höhen-Zeit-Faltungsblock aufweist, der ein oder mehrere lokale Gebiete verarbeitet, die sich über eine Zeitdimension und eine Höhendimension erstrecken, und Pixeldifferenzen ausgewählter Pixelpaare nutzt, um lokale räumlich-zeitliche Änderungen zu prüfen, und/oder
> einen räumlich-zeitlichen Breiten-Zeit-Faltungsblock beinhaltet, der ein oder mehrere lokale Gebiete verarbeitet, die sich über eine Zeitdimension und eine Breitendimension erstrecken, und Pixeldifferenzen ausgewählter Pixelpaare nutzt, um lokale räumlich-zeitliche Änderungen zu prüfen, und/oder
> wodurch eine Faltung auf einer oder mehreren zweidimensionalen räumlich-zeitlichen Ebenen der ersten kombinierten Merkmalskarte durchgeführt wird.

3. Verfahren nach Anspruch 2, wobei das räumlich-zeitliche Differenzfaltungsmodul eine Faltung unter Verwendung eines oder mehrerer zweiter Parameter durchführt, die basierend auf unterschiedlichen räumlich-zeitlichen Faltungsarten trainiert werden.

4. Verfahren nach einem der Ansprüche 1-3, wobei das Bilden der ersten Backbone-Stufe ferner Folgendes umfasst: eine zweite räumliche Differenzschicht zum Durchführen einer Faltung an einer Ausgabe der ersten räumlichen Differenzschicht unter Verwendung eines oder mehrerer dritter Parameter, die basierend auf unterschiedlichen räumlichen Faltungsarten trainiert werden, wobei die räumlichen Faltungsarten mindestens einen Standardfaltungsoperator und mindestens einen Pixeldifferenzfaltungsoperator umfassen.

5. Verfahren nach einem der Ansprüche 1-4, ferner umfassend:

> Eingeben der zweiten Merkmalskarte in eine dritte Backbone-Stufe des Maschinenlernmodells;
> Erzeugen einer vierten Merkmalskarte durch die dritte Backbone-Stufe basierend auf der zweiten Merkmalskarte;
> Eingeben der vierten Merkmalskarte in einen dritten Zweig des Maschinenlernmodells;
> Erzeugen einer fünften Merkmalskarte durch den dritten Zweig basierend auf der vierten Merkmalskarte;
> Eingeben der fünften Merkmalskarte in den ersten Zweig; und
> Kombinieren der zweiten Merkmalskarte mit der fünften Merkmalskarte durch den ersten Zweig, um eine zweite kombinierte Merkmalskarte zu erzeugen;
> wobei der erste Zweig die dritte Merkmalskarte basierend auf der zweiten kombinierten Merkmalskarte erzeugt.

6. Verfahren nach Anspruch 5, ferner umfassend:

> Eingeben der vierten Merkmalskarte in eine vierte Backbone-Stufe des Maschinenlernmodells;
> Erzeugen einer sechsten Merkmalskarte durch die vierte Backbone-Stufe basierend auf der vierten Merkmalskarte;
> Eingeben der sechsten Merkmalskarte in einen vierten Zweig des Maschinenlernmodells;
> Erzeugen einer siebten Merkmalskarte durch den vierten Zweig basierend auf der sechsten Merkmalskarte;
> Eingeben der siebten Merkmalskarte in den dritten Zweig; und
> Kombinieren der vierten Merkmalskarte mit der siebten Merkmalskarte durch den dritten Zweig, um eine dritte kombinierte Merkmalskarte zu erzeugen;
> wobei der dritte Zweig die fünfte Merkmalskarte basierend auf der dritten kombinierten Merkmalskarte erzeugt.

7. Verfahren nach einem der Ansprüche 1-6, wobei:

> das Erzeugen der einen oder der mehreren Vorhersagen durch den zweiten Zweig das Verarbeiten der ersten kombinierten Merkmalskarte durch ein Dilatationsfaltungsmodul in dem zweiten Zweig umfasst; und
> das Dilatationsfaltungsmodul eine oder mehrere dilatierte Faltungen durchführt.

8. Verfahren nach einem der Ansprüche 1-7, wobei:
das Erzeugen der einen oder der mehreren Vorhersagen durch den zweiten Zweig umfasst:

Kombinieren einer Ausgabe eines räumlich-zeitlichen Differenzfaltungsmoduls und einer Ausgabe eines Dilatationsfaltungsmoduls in dem zweiten Zweig, um eine vierte kombinierte Merkmalskarte zu erzeugen; und
Verarbeiten der vierten kombinierten Merkmalskarte durch ein räumliches Aufmerksamkeitsmodul in dem zweiten Zweig; das räumlich-zeitliche Differenzfaltungsmodul eine Faltung auf einer oder mehreren zweidimensionalen räumlich-zeitlichen Ebenen der ersten kombinierten Merkmalskarte durchführt;
das Dilatationsfaltungsmodul eine oder mehrere dilatierte Faltungen durchführt; und
das räumliche Aufmerksamkeitsmodul eine Faltung durchführt, um räumliche Korrelationsinformationen zu extrahieren.

9. Einrichtung, umfassend:

einen oder mehrere Prozessoren; und
eine oder mehrere Speicherungsvorrichtungen, die ein Maschinenlernmodell mit Verarbeitungsoperationen speichern, die durch den einen oder die mehreren Prozessoren durchgeführt werden, wobei das Maschinenlernmodell Folgendes umfasst:

eine erste Backbone-Stufe, die ein oder mehrere Bilder empfängt und eine erste Merkmalskarte erzeugt, wobei die erste Backbone-Stufe eine erste räumliche Differenzschicht mit einem gemischten Faltungsoperator umfasst, der verschiedene Faltungsarten zusammenführt, um eine Faltung unter Verwendung eines oder mehrerer erster Parameter durchzuführen, die basierend auf unterschiedlichen räumlichen Faltungsarten trainiert werden, wobei der zusammengeführte Faltungsoperator durch Verschmelzen der Sätze von Parametern, die zur Trainingszeit in verschiedenen Faltungsoperatoren erhalten wurden, die verschiedenen Faltungsarten entsprechen, in einen Satz von Parametern erzeugt wurde, die in dem zusammengeführten Faltungsoperator verwendet werden sollen, wobei die räumlichen Faltungsarten mindestens einen Standardfaltungsoperator und mindestens einen Pixeldifferenzfaltungsoperator umfassen;
eine zweite Backbone-Stufe, die die erste Merkmalskarte von der ersten Backbone-Stufe empfängt und eine zweite Merkmalskarte basierend auf der ersten Merkmalskarte erzeugt;
einen ersten Zweig, der die zweite Merkmalskarte von der zweiten Backbone-Stufe empfängt und eine dritte Merkmalskarte basierend auf der zweiten Merkmalskarte erzeugt; und
einen zweiten Zweig, der die erste Merkmalskarte von der ersten Backbone-Stufe und die dritte Merkmalskarte von dem ersten Zweig empfängt, die erste Merkmalskarte mit der dritten Merkmalskarte kombiniert, um eine erste kombinierte Merkmalskarte zu erzeugen, wobei das Kombinieren Verkettung, Hinzufügen, Summieren oder Zusammenführen umfasst, und eine oder mehrere Vorhersagen über das eine oder die mehreren Bilder basierend auf der ersten kombinierten Merkmalskarte erzeugt, wobei die eine oder die mehreren Vorhersagen eines oder mehrere der folgenden umfassen: Kantendetektion, Bildsegmentierung, Vordergrunddetektion, Hintergrunddetektion, Detektion auffälliger Objekte und Objektklassifizierung.

10. Einrichtung nach Anspruch 9, wobei der zweite Zweig ein räumlich-zeitliches Differenzfaltungsmodul zum Durchführen einer Faltung auf einer oder mehreren zweidimensionalen räumlich-zeitlichen Ebenen der ersten kombinierten Merkmalskarte umfasst.

11. Einrichtung nach Anspruch 10, wobei das räumlich-zeitliche Differenzfaltungsmodul Folgendes umfasst:

einen ersten räumlich-zeitlichen Differenzfaltungsblock, der eine Faltung auf einem ersten lokalen Gebiet in einer Höhen-Zeit-Ebene durchführt; und
einen zweiten räumlich-zeitlichen Differenzfaltungsblock, der ein zweites lokales Gebiet in einer Breiten-Zeit-Ebene verarbeitet.

12. Einrichtung nach Anspruch 10 oder 11, wobei das räumlich-zeitliche Differenzfaltungsmodul eine Faltung unter Verwendung eines oder mehrerer zweiter Parameter durchführt, die basierend auf unterschiedlichen räumlich-zeitlichen Faltungsarten trainiert werden.

13. Einrichtung nach einem der Ansprüche 9-12, wobei die zweite Backbone-Stufe einen Sichttransformerblock zum Extrahieren von Abstandsbeziehungen zwischen Bildbereichen umfasst.

14. Einrichtung nach einem der Ansprüche 9-13, wobei der zweite Zweig ferner eines oder mehrere des Folgenden umfasst:

ein Dilatationsfaltungsmodul zum Empfangen der ersten kombinierten Merkmalskarte und Durchführen einer oder mehrerer dilatierter Faltungen; und

ein räumliches Aufmerksamkeitsmodul zum Durchführen einer Faltung und Extrahieren räumlicher Korrelationsinformationen.

15. Ein oder mehrere nichtflüchtige computerlesbare Medien, die Anweisungen speichern, die, wenn sie von einem oder mehreren Prozessoren ausgeführt werden, den einen oder die mehreren Prozessoren veranlassen, ein Verfahren nach einem der Ansprüche 1-8 durchzuführen.

**Revendications**

1. Procédé comprenant :

l'entrée d'une ou de plusieurs images dans un premier niveau de backbone d'un modèle d'apprentissage automatique, le premier niveau de backbone comprenant une première couche de différence spatiale avec un opérateur de convolution fusionné fusionnant différents types de convolution pour réaliser une convolution au moyen d'un ou de plusieurs premiers paramètres entraînés sur la base de différents types de convolution spatiale, ledit opérateur de convolution fusionné ayant été créé par fusion des ensembles de paramètres obtenus au moment de l'entraînement dans divers opérateurs de convolution correspondant à différents types de convolution en un ensemble de paramètres destiné à être utilisé dans l'opérateur de convolution fusionné, lesdits types de convolution spatiale comprenant au moins un opérateur de convolution standard et au moins un opérateur de convolution de différence de pixels ;

la génération, par le premier niveau de backbone, d'une première carte de caractéristiques sur la base de la ou des images ;

l'entrée de la première carte de caractéristiques dans un deuxième niveau de backbone du modèle d'apprentissage automatique ;

la génération, par le deuxième niveau de backbone, d'une deuxième carte de caractéristiques sur la base de la première carte de caractéristiques ;

l'entrée de la deuxième carte de caractéristiques dans une première branche du modèle d'apprentissage automatique ;

la génération, par la première branche, d'une troisième carte de caractéristiques sur la base de la deuxième carte de caractéristiques ;

l'entrée de la première carte de caractéristiques et de la troisième carte de caractéristiques dans une deuxième branche du modèle d'apprentissage automatique ;

la combinaison, par la deuxième branche, de la première carte de caractéristiques avec la troisième carte de caractéristiques pour générer une première carte de caractéristiques combinée, ladite combinaison comprenant une concaténation, une addition, une sommation ou une fusion ; et

la génération, par la deuxième branche, d'une ou de plusieurs prédictions concernant la ou les images sur la base de la première carte de caractéristiques combinée, ladite ou lesdites prédictions comprenant un ou plusieurs éléments dans le groupe constitué par : une détection de contours, une segmentation d'image, une détection d'avant-plan, une détection d'arrière-plan, une détection d'objets saillants, et une classification d'objets.

2. Procédé selon la revendication 1, dans lequel :

la génération, par la deuxième branche, de la ou des prédictions comprend le traitement, par un module de convolution de différence spatio-temporelle dans la deuxième branche, de la première carte de caractéristiques combinée ; et

le module de convolution de différence spatio-temporelle comporte un bloc de convolution spatio-temporelle hauteur-temps qui traite une ou plusieurs régions locales qui s'étendent sur une dimension temporelle et une dimension hauteur, et exploite des différences de pixels de paires de pixels sélectionnées pour sonder des variations spatio-temporelles locales, et/ou

comporte un bloc de convolution spatio-temporelle largeur-temps qui traite une ou plusieurs régions locales qui s'étendent sur une dimension temporelle et une dimension largeur, et exploite des différences de pixels de paires de pixels sélectionnées pour sonder des variations spatio-temporelles locales,

pour ainsi réaliser une convolution sur un ou plusieurs plans bidimensionnels spatio-temporels de la première carte de caractéristiques combinée.

**3.** Procédé selon la revendication 2, dans lequel le module de convolution de différence spatio-temporelle réalise une convolution au moyen d'un ou de plusieurs deuxièmes paramètres entraînés sur la base de différents types de convolution spatio-temporelle.

**4.** Procédé selon l'une quelconque des revendications 1 à 3, dans lequel le premier niveau de backbone comprend en outre :
une deuxième couche de différence spatiale pour réaliser une convolution sur une sortie de la première couche de différence spatiale au moyen d'un ou de plusieurs troisièmes paramètres entraînés sur la base de différents types de convolution spatiale, lesdits types de convolution spatiale comprenant au moins un opérateur de convolution standard et au moins un opérateur de convolution de différence de pixels.

**5.** Procédé selon l'une quelconque des revendications 1 à 4, comprenant en outre :

l'entrée de la première carte de caractéristiques dans un troisième niveau de backbone du modèle d'apprentissage automatique ;
la génération, par le troisième niveau de backbone, d'une quatrième carte de caractéristiques sur la base de la deuxième carte de caractéristiques ;
l'entrée de la quatrième carte de caractéristiques dans une troisième branche du modèle d'apprentissage automatique ;
la génération, par la troisième branche, d'une cinquième carte de caractéristiques sur la base de la quatrième carte de caractéristiques ;
l'entrée de la cinquième carte de caractéristiques dans la première branche ; et
la combinaison, par la première branche, de la deuxième carte de caractéristiques avec la cinquième carte de caractéristiques pour générer une deuxième carte de caractéristiques combinée ;
la première branche générant la troisième carte de caractéristiques sur la base de la deuxième carte de caractéristiques combinée.

**6.** Procédé selon la revendication 5, comprenant en outre :

l'entrée de la quatrième carte de caractéristiques dans un quatrième niveau de backbone du modèle d'apprentissage automatique ;
la génération, par le quatrième niveau de backbone, d'une sixième carte de caractéristiques sur la base de la quatrième carte de caractéristiques ;
l'entrée de la sixième carte de caractéristiques dans une quatrième branche du modèle d'apprentissage automatique ;
la génération, par la quatrième branche, d'une septième carte de caractéristiques sur la base de la sixième carte de caractéristiques ;
l'entrée de la septième carte de caractéristiques dans la troisième branche ; et
la combinaison, par la troisième branche, de la quatrième carte de caractéristiques avec la septième carte de caractéristiques pour générer une troisième carte de caractéristiques combinée ;
la troisième branche générant la cinquième carte de caractéristiques sur la base de la troisième carte de caractéristiques combinée.

**7.** Procédé selon l'une quelconque des revendications 1 à 6, dans lequel :

la génération, par la deuxième branche, de la ou des prédictions comprend le traitement, par un module de convolution de dilatation dans la deuxième branche, de la première carte de caractéristiques combinée ; et
le module de convolution de dilatation réalise une ou plusieurs convolutions dilatées.

**8.** Procédé selon l'une quelconque des revendications 1 à 7, dans lequel :
la génération, par la deuxième branche, de la ou des prédictions comprend :

la combinaison, dans la deuxième branche, d'une sortie d'un module de convolution de différence spatio-temporelle et d'une sortie d'un module de convolution de dilatation pour générer une quatrième carte de caractéristiques combinée ; et
le traitement, par un module d'attention spatiale dans la deuxième branche, de la quatrième carte de caractéristiques combinée ;
le module de convolution de différence spatio-temporelle réalise une convolution sur un ou plusieurs plans bidimensionnels spatio-temporels de la première carte de caractéristiques combinée ;
le module de convolution de dilatation réalise une ou plusieurs convolutions dilatées ; et
le module d'attention spatiale réalise une convolution pour extraire des informations de corrélation spatiale.

9. Appareil, comprenant :

un ou plusieurs processeurs ; et
un ou plusieurs dispositifs de stockage stockant un modèle d'apprentissage automatique comportant des opérations de traitement réalisées par le ou les processeurs, le modèle d'apprentissage automatique comprenant :

un premier niveau de backbone recevant une ou plusieurs images et générant une première carte de caractéristiques, le premier niveau de backbone comprenant une première couche de différence spatiale avec un opérateur de convolution fusionné fusionnant différents types de convolution pour réaliser une convolution au moyen d'un ou de plusieurs premiers paramètres entraînés sur la base de différents types de convolution spatiale, ledit opérateur de convolution fusionné ayant été créé par fusion des ensembles de paramètres obtenus au moment de l'entraînement dans divers opérateurs de convolution correspondant à différents types de convolution en un ensemble de paramètres destiné à être utilisé dans l'opérateur de convolution fusionné, lesdits types de convolution spatiale comprenant au moins un opérateur de convolution standard et au moins un opérateur de convolution de différence de pixels ;
un deuxième niveau de backbone recevant la première carte de caractéristiques provenant du premier niveau de backbone et générant une deuxième carte de caractéristiques sur la base de la première carte de caractéristiques ;
une première branche recevant la deuxième carte de caractéristiques provenant du deuxième niveau de backbone et générant une troisième carte de caractéristiques sur la base de la deuxième carte de caractéristiques ; et
une deuxième branche recevant la première carte de caractéristiques provenant du premier niveau de backbone et la troisième carte de caractéristiques provenant de la première branche, combinant la première carte de caractéristiques avec la troisième carte de caractéristiques pour générer une première carte de caractéristiques combinée, ladite combinaison comprenant une concaténation, une addition, une sommation ou une fusion, et générant une ou plusieurs prédictions concernant la ou les images sur la base de la première carte de caractéristiques combinée, ladite ou lesdites prédictions comprenant un ou plusieurs éléments dans le groupe constitué par : une détection de contours, une segmentation d'image, une détection d'avant-plan, une détection d'arrière-plan, une détection d'objets saillants, et une classification d'objets.

10. Appareil selon la revendication 9, dans lequel la deuxième branche comprend un module de convolution de différence spatio-temporelle pour réaliser une convolution sur un ou plusieurs plans bidimensionnels spatio-temporels de la première carte de caractéristiques combinée.

11. Appareil selon la revendication 10, dans lequel le module de convolution de différence spatio-temporelle comprend :

un premier bloc de convolution de différence spatio-temporelle qui réalise une convolution sur une première région locale dans un plan hauteur-temps ; et
un deuxième bloc de convolution de différence spatio-temporelle qui traite une deuxième région locale dans un plan largeur-temps.

12. Appareil selon la revendication 10 ou 11, dans lequel le module de convolution de différence spatio-temporelle réalise une convolution au moyen d'un ou de plusieurs deuxièmes paramètres entraînés sur la base de différents types de convolution spatio-temporelle.

13. Appareil selon l'une quelconque des revendications 9 à 12, dans lequel le deuxième niveau de backbone comprend un bloc transformateur de vision pour extraire des relations de distance entre des régions d'image.

14. Appareil selon l'une quelconque des revendications 9 à 13, dans lequel la deuxième branche comprend en outre au moins un des éléments suivants :

un module de convolution de dilatation pour recevoir la première carte de caractéristiques combinée et réaliser une ou plusieurs convolutions dilatées ; et

un module d'attention spatiale pour réaliser une convolution et extraire des informations de corrélation spatiale.

15. Support(s) non transitoire(s) lisible(s) par ordinateur stockant des instructions qui, lorsqu'elles sont exécutées par un ou plusieurs processeurs, amènent le ou les processeurs à réaliser un procédé selon l'une quelconque des revendications 1 à 8.

FIGURE 1

FIGURE 2

**FIGURE 3A**

**FIGURE 3B**

**FIGURE 3C**

**FIGURE 3D**

= STANDARD CONVOLUTION

= MERGED CONVOLUTION
(REPARAMERIZATION)

= DIFFERENT PIXEL DIFFERENCE
CONVOLUTION TYPES

FIGURE 4

STDM 502

520

530

540

STDC(H-T) 512 → + → STDC(W-T) 522 → + → PROJECT →

## FIGURE 5A

STDM 502

520

530

540

STDC(W-T) 522 → + → STDC(H-T) 512 → + → PROJECT →

## FIGURE 5B

FIGURE 6

FIGURE 7

W-T PLANE

H-T PLANE

STANDARD CONVOLUTION

CENTRAL PIXEL DIFFERENCE CONVOLUTION

ANGULAR PIXEL DIFFERENCE CONVOLUTION

STANDARD CONVOLUTION

CENTRAL PIXEL DIFFERENCE CONVOLUTION

ANGULAR PIXEL DIFFERENCE CONVOLUTION

# FIGURE 8

900

902

MERGED CONVOLUTION OPERATOR

904

ACTIVATION BLOCK

906

1 x 1 CONVOLUTION

910

FIGURE 9

1000

1002

ACTIVATION BLOCK

1004

1 x 1 CONVOLUTION

1006

1008

1010

1012

| 3 x 3, DILATION=5 | 3 x 3, DILATION=7 | 3 x 3, DILATION=9 | 3 x 3, DILATION=11 |

1014

FIGURE 10

1100

1102 ACTIVATION BLOCK

1104 1 x 1 CONVOLUTION

1106 3 x 3 CONVOLUTION

1108 ACTIVATION BLOCK

1114 X

# FIGURE 11

1200

INPUT IMAGES INTO A FIRST
BACKBONE STAGE 1202

GENERATE A FIRST FEATURE
MAP BASED ON THE ONE OR
MORE IMAGES BY THE FIRST
BACKBONE STAGE 1204

INPUT THE FIRST FEATURE MAP
INTO A SECOND BACKBONE
STAGE 1206

GENERATE A SECOND FEATURE
MAP BY THE SECOND BACKBONE
STAGE 1208

INPUT THE SECOND FEATURE
MAP INTO A FIRST BRANCH 1210

GENERATE A THIRD FEATURE
MAP BY THE FIRST BRANCH 1212

INPUT THE FIRST FEATURE MAP
AND THE THIRD FEATURE MAP
INTO A SECOND BRANCH 1214

COMBINE THE FIRST FEATURE
MAP WITH THE THIRD FEATURE
MAP TO GENERATE A FIRST
COMBINED FEATURE MAP BY THE
SECOND BRANCH 1216

GENERATE PREDICTIONS ABOUT
THE IMAGES BASED ON THE
FIRST COMBINED FEATURE MAP
1218

FIGURE 12

1300

UPDATE PARAMETERS OF A MACHINE LEARNING MODEL
USING TRAINING DATA 1302

FUSE FIRST SETS OF PARAMETERS INTO A FIRST FUSED
SET OF PARAMETERS 1304

USE THE FIRST FUSED SET OF PARAMETERS IN A FIRST
CNN LAYER TO PROCESS ONE OR MORE IMAGES 1306

FIGURE 13

1400

DETERMINE A FIRST LOCAL REGION
IN A H-T PLANE OF FIRST INPUT
FEATURES 1402

PROCESS THE FIRST LOCAL REGION
USING FIRST PARAMETERS 1404

DETERMINE A SECOND LOCAL
REGION IN A W-T PLANE OF SECOND
INPUT FEATURES 1406

PROCESS THE SECOND LOCAL REGION
USING SECOND PARAMETERS 1408

FIGURE 14

1500

UPDATE PARAMETERS OF A MACHINE LEARNING MODEL USING TRAINING DATA 1502

FUSE FIRST SET OF PARAMETERS AND SECOND SET OF PARAMETERS INTO A FIRST FUSED SET OF PARAMETERS 1504

USE THE FIRST FUSED SET OF PARAMETERS IN A FIRST SPATIAL TEMPORAL CNN LAYER TO PROCESS FEATURES EXTRACTED FROM ONE OR MORE IMAGES 1506

# FIGURE 15

COMPUTING DEVICE 1600

MEMORY 1604

TRAINING DATA
1688

100'

REPARAMERIZER
1696

100

UPDATE 1690

200'

200

402

502

404

650

660

750

760

900

1000

1100

PROCESSING DEVICE
1602

ANTENNA 1622

COMMUNICATION DEVICE
1612

DISPLAY DEVICE
1606

GPS DEVICE
1616

POWER
SOURCE /
POWER
CIRCUITRY
1614

AUDIO OUTPUT DEVICE
1608

AUDIO INPUT DEVICE
1618

OTHER OUTPUT DEVICE
1610

OTHER INPUT DEVICE
1620

SENSOR
1630

FIGURE 16

## EP 4 517 682 B1

**Patent documents cited in the description**

- US 2023031579 A1